# EUROPEAN PATENT APPLICATION

(11) **EP 4 029 901 A1**
(43) Date of publication of application: **20.07.2022**
(21) Application number: 20879206.9
(22) Date of filing: 19.10.2020
(51) Int. Cl.: C08G 77/26, C08L 83/08, C08L 101/00

(54) **POLYSILOXANE COPOLYMER, METHOD FOR PRODUCING SAME, AND RESIN COMPOSITION COMPRISING SAME**

(30) Priority: 23.10.2019 KR 20190131999
(71) Applicant: Hunetplus Co., Ltd., Chungcheongnam-do 31075 (KR)
(72) Inventor: KIM, Keun Soo, Daejeon 34071 (KR); CHOI, Bum Young, Cheonan-si Chungcheongnam-do 31175 (KR); CHO, Haeng Kyu, Nonsan-si Chungcheongnam-do 32983 (KR); JUNG, Tong Il, Cheonan-si Chungcheongnam-do 31171 (KR); SEOK, Jae Seo, Daejeon 34018 (KR); CHA, Hyuk Jin, Seoul 06191 (KR)
(74) Representative: Prüfer & Partner mbB Patentanwälte · Rechtsanwälte
(86) International application number: PCT/KR2020/014235
(87) International publication number: WO 2021/080267

(57) **Abstract**

The present invention relates to a polysiloxane copolymer including a structural unit derived from a siloxane-based polymer and a structural unit derived from a silane-based monomer, and a method for preparing the same. The polysiloxane copolymer of the present invention has excellent heat resistance, flexibility, transparency, photosensitivity, durability and the like, and may be widely used as a material in an optical field or/and an electronic field.

## Description

### [Technical Field]

The present invention relates to polysiloxane copolymers that may be used as materials in various fields (for example, a print circuit board material, a cover film material, a photosensitive material and the like) by having excellent heat resistance, flexibility, transparency, photosensitivity, durability and the like, and a method for preparing the polysiloxane copolymer.

### [Background Art]

Polymers having heat resistance are used as an essential material in an optical field or/and an electronic field. Specifically, heat resistant polymers are used as a print circuit board material or a cover film material to obtain a foldable or curved display, or used as a photosensitive material in an exposure and development process. In addition, with the trend of weight lightening and thinning, heat resistant polymers are also used as a substrate material replacing an inorganic glass substrate material.

However, currently-known heat resistant polymers have limitations in obtaining all of heat resistance, flexibility, transparency, photosensitivity, durability and the like to required levels, and thereby have a problem in that each material has limitations in the field of use. For example, polyether sulfone (PES) as a heat resistant polymer, has excellent mechanical properties and is used as a cover film material, but it is difficult to apply as a print circuit board(cover film) material due to its poor heat resistance and flexibility that a print circuit board material needs to have. In addition, polyimide (PI) as a heat resistant polymer, is used as a print circuit board material due to excellent heat resistance and flexibility, but it is difficult to apply as a material in an optical field due to poor transparency caused by a complete aromatic structure.

Accordingly, polymers having excellent properties in all of flexibility, transparency, photosensitivity, durability and the like as well as heat resistance have been required.

### [Disclosure]

### [Technical Problem]

The present invention is directed to providing polysiloxane copolymers that could be widely used as materials in an optical field or/and an electronic field by having excellent heat resistance, flexibility, transparency, photosensitivity, durability and the like.

In addition, the present invention is directed to providing a method for preparing the polysiloxane copolymers.

Furthermore, the present invention is directed to providing a resin compositions including the polysiloxane copolymer.

### [Technical Solution]

According to an aspect of the present invention in view of the above, there is provided a polysiloxane copolymer including a siloxane-based polymer-derived structural unit and a silane-based monomer-derived structural unit, wherein the silane-based monomer is selected from the group consisting of compounds represented by the following Chemical Formula 1 to Chemical Formula 3.

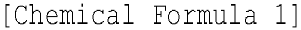

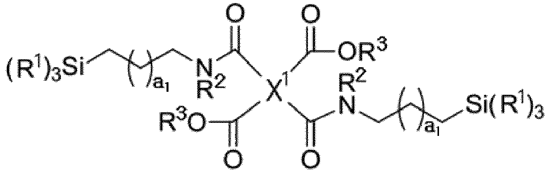

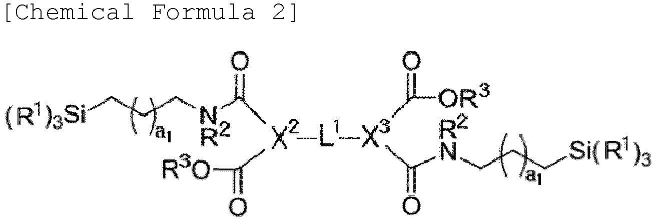

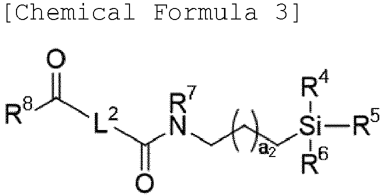

In Chemical Formula 1 and Chemical Formula 2,
X¹ to X³ are each independently selected from the group consisting of an aliphatic hydrocarbon group having 1 to 10 carbon atoms, an alicyclic hydrocarbon group having 4 to 20 carbon atoms and an aromatic hydrocarbon group having 4 to 20 carbon atoms, R¹ is an aliphatic hydrocarbon group having 1 to 10 carbon atoms, R² and R³ are each independently selected from the group consisting of hydrogen and an aliphatic hydrocarbon group having 1 to 10 carbon atoms, L¹ is selected from the group consisting of an oxygen atom and an aliphatic hydrocarbon group having 1 to 12 carbon atoms, and a₁ is an integer of 0 to 20,
in Chemical Formula 3,
R⁴ to R⁶ are each independently selected from the group consisting of hydrogen, an aliphatic hydrocarbon group having 1 to 10 carbon atoms and an aromatic hydrocarbon group having 3 to 20 carbon atoms, R⁷ is selected from the group consisting of hydrogen and an aliphatic hydrocarbon group having 1 to 10 carbon atoms, R⁸ is selected from the group consisting of hydrogen, a hydroxyl group and an aliphatic hydrocarbon group having 1 to 10 carbon atoms, L² is selected from the group consisting of a single bond, an aliphatic hydrocarbon group having 1 to 10 carbon atoms, an alicyclic hydrocarbon group having 3 to 10 carbon atoms and an aromatic hydrocarbon group having 3 to 20 carbon atoms, and a₂ is an integer of 0 to 20, and
R¹ to R⁸, X¹ to X³, L¹ and L² are each independently unsubstituted or substituted with one or more types of substituents selected from the group consisting of an oxygen atom, a fluorine atom, an aliphatic hydrocarbon group having 1 to 10 carbon atoms and an aromatic hydrocarbon group having 3 to 20 carbon atoms.

According to another aspect of the present invention, there is provided a method for preparing a polysiloxane copolymer, the method including preparing a first silane compound; preparing a silane-based monomer by reacting a second silane compound and an anhydride-based compound; and reacting the first silane compound and the silane-based monomer at the same time, wherein the silane-based monomer is selected from the group consisting of the compounds represented by Chemical Formula 1 to Chemical Formula 3.

According to another aspect of the present invention, there is provided a method for preparing a polysiloxane copolymer, the method including preparing a siloxane-based polymer by reacting a first silane compound; preparing a silane-based monomer by reacting a second silane compound and an anhydride-based compound; and reacting the siloxane-based polymer and the silane-based monomer, wherein the silane-based monomer is selected from the group consisting of the compounds represented by Chemical Formula 1 to Chemical Formula 3.

According to another aspect of the present invention, there is provided a resin composition including a binder resin; an organic solvent; and an additive, wherein the binder resin is the polysiloxane copolymer.

In the present invention, the term 'derived structural unit' may represent a component, a structure or the material itself derived from a polymer, a monomer or a compound, and as a specific example, may mean a structural unit (repeating unit) formed in a copolymer by a polymer, a monomer or a compound introduced during a polymerization reaction participating in the polymerization reaction.

In the present invention, the term 'aliphatic hydrocarbon group' refers to carbon and hydrogen forming a single bond in a linear or branched structure, and may mean a monovalent to tetravalent aliphatic hydrocarbon group. The monovalent to tetravalent may mean the number of bonds that the aliphatic hydrocarbon group bonds to a parent as a substituent, and the minimum number of carbon atoms of the substituent represented by the aliphatic hydrocarbon group may be determined depending on the type of the each substituent.

In the present invention, the term `alicyclic hydrocarbon group' refers to carbon and hydrogen forming a single bond in a cyclic structure, and may mean a monovalent to tetravalent alicyclic hydrocarbon group. The monovalent to tetravalent may mean the number of bonds that the alicyclic hydrocarbon group bonds to a parent as a substituent, and the minimum number of carbon atoms of the substituent represented by the alicyclic hydrocarbon group may be determined depending on the type of the each substituent.

In the present invention, the term `aromatic hydrocarbon group' refers to carbon and hydrogen forming one or more single bonds and one or more unsaturated bonds in a cyclic structure, and may mean a monovalent to tetravalent aromatic hydrocarbon group. The monovalent to tetravalent may mean the number of bonds that the aromatic hydrocarbon group bonds to a parent as a substituent, and the minimum number of carbon atoms of the substituent represented by the aromatic hydrocarbon group may be determined depending on the type of the each substituent. In addition, the aromatic hydrocarbon group may be defined to include an aromatic hydrocarbon group including one or more types of heteroatoms (for example, N, O, S, F).

### [Advantageous Effects]

A polysiloxane copolymer according to the present invention has a structure in which a structural unit derived from a siloxane-based polymer bonds (is linked) by a structural unit derived from a silane-based monomer, and can have excellent flexibility thereby. In addition, the polysiloxane copolymer according to the present invention has a silanol group (Si-OH) present in the siloxane-based polymer capped by the silane-based monomer during the preparation, and therefore, can have excellent stability. In addition, the polysiloxane copolymer according to the present invention has an amic acid structure or an imide structure, and therefore, can have excellent heat resistance and photosensitivity (developability).

Therefore, a resin composition including the polysiloxane copolymer according to the present invention can be widely used as a material in various fields such as an optical field or/and an electronic field.

### [Description of Drawings]

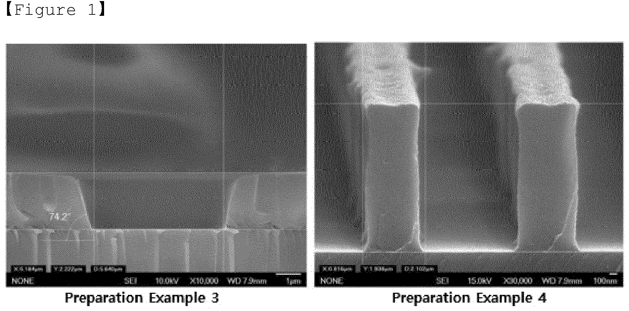

FIG. 1 is a reference diagram for describing an experimental example of the present invention.

### [Mode for Invention]

Terms or words used in the descriptions and the claims of the present invention are not to be interpreted limitedly to common or dictionary meanings, and shall be interpreted as meanings and concepts corresponding to technological ideas of the present invention based on a principle in which the inventors may suitably define the concepts of terms in order to describe the invention in the best possible way.

A polysiloxane copolymer of the present invention is obtained by bonding between a hard block including an amic acid structure and a soft block including a siloxane group, and, since such a polysiloxane copolymer of the present invention may have its molecular weight readily controlled and have high mixing entropy, may be used as a material in various fields. Such a polysiloxane copolymer of the present invention may be specifically described as follows.

The polysiloxane copolymer according to one embodiment of the present invention includes a siloxane-based polymer-derived structural unit (that is, a structural unit derived from a siloxane polymer) and a silane-based monomer-derived structural unit (that is, a structural unit derived from a silane-based monomer), and the silane-based monomer may be selected from the group consisting of compounds represented by the following Chemical Formula 1 to Chemical Formula 3.

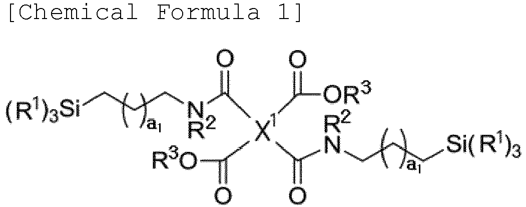

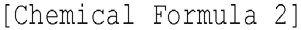

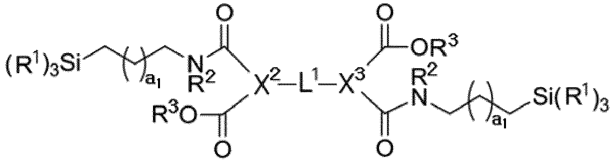

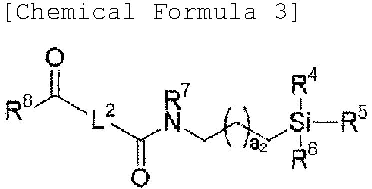

In Chemical Formula 1 and Chemical Formula 2, X¹ to X³ are each independently selected from the group consisting of an aliphatic hydrocarbon group having 1 to 10 carbon atoms, an alicyclic hydrocarbon group having 4 to 20 carbon atoms and an aromatic hydrocarbon group having 4 to 20 carbon atoms, R¹ is an aliphatic hydrocarbon group having 1 to 10 carbon atoms, R² and R³ are each independently selected from the group consisting of hydrogen and an aliphatic hydrocarbon group having 1 to 10 carbon atoms, L¹ is selected from the group consisting of an oxygen atom and an aliphatic hydrocarbon group having 1 to 12 carbon atoms, and a₁ may be an integer of 0 to 20.

In Chemical Formula 3, R⁴ to R⁶ are each independently selected from the group consisting of hydrogen, an aliphatic hydrocarbon group having 1 to 10 carbon atoms and an aromatic hydrocarbon group having 3 to 20 carbon atoms, R⁷ is selected from the group consisting of hydrogen and an aliphatic hydrocarbon group having 1 to 10 carbon atoms, R⁸ is selected from the group consisting of hydrogen, a hydroxyl group and an aliphatic hydrocarbon group having 1 to 10 carbon atoms, L² is selected from the group consisting of a single bond, an aliphatic hydrocarbon group having 1 to 10 carbon atoms, an alicyclic hydrocarbon group having 3 to 10 carbon atoms and an aromatic hydrocarbon group having 3 to 20 carbon atoms, and a₂ may be an integer of 0 to 20.

In Chemical Formula 1 to Chemical Formula 3, R¹ to R⁸, X¹ to X³, L¹ and L² may be each independently unsubstituted or substituted with one or more types of substituents selected from the group consisting of an oxygen atom, a fluorine atom, an aliphatic hydrocarbon group having 1 to 10 carbon atoms and an aromatic hydrocarbon group having 3 to 20 carbon atoms.

Specifically, X¹ to X³ may be each independently selected from the group consisting of an aliphatic hydrocarbon group having 1 to 3 carbon atoms, an alicyclic hydrocarbon group having 4 to 12 carbon atoms and an aromatic hydrocarbon group having 6 to 10 carbon atoms. More specifically, X¹ may be selected from the group consisting of structures represented by the following X-1 to X-5 (* means a substituent bonding position), and X² and X³ may be a structure represented by the following X-6 (* means a substituent bonding position). Even more specifically, X¹ may be a structure represented by X-1 or X-2. When X¹ is alicyclic as the structure represented by X-1 or X-2, the polysiloxane copolymer may have increased transparency, and as a result, the polysiloxane copolymer of the present invention may be usefully applied as a material in an optical field, a material of a cover film, or a material replacing an inorganic glass substrate.

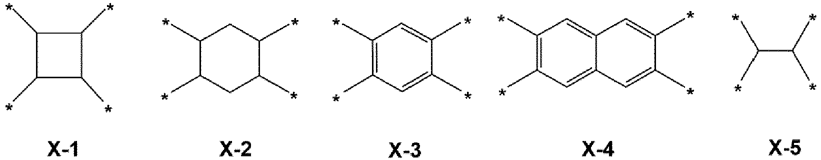

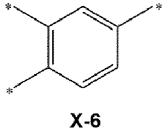

R¹ may be an alkyl group having 1 to 10 carbon atoms (for example, a methyl group, an ethyl group, a propyl group and the like) or an alkyloxy group having 1 to 10 carbon atoms (for example, a methoxy group, an ethoxy group and the like). When R¹ is the alkyl group or the alkyloxy group, the molecular weight may be readily controlled, and a polysiloxane copolymer having wide molecular weight distribution may be provided. In addition, the silanol group (Si-OH) bonding to the siloxane polymer may be favorably capped, and a polysiloxane copolymer having excellent stability may be provided.

R² and R³ may all be hydrogen. When R² and R³ are all hydrogen, the polysiloxane copolymer has an amic acid structure, and a polysiloxane copolymer having excellent heat resistance may be provided.

L¹ may be selected from the group consisting of an ether group, a ketone group and an alkylene group having 1 to 10 carbon atoms. Specifically, when considering synthesis readiness of the silane-based monomer, L¹ may be selected from the group consisting of structures represented by the following L-1 to L-7 (* means a substituent bonding position) .

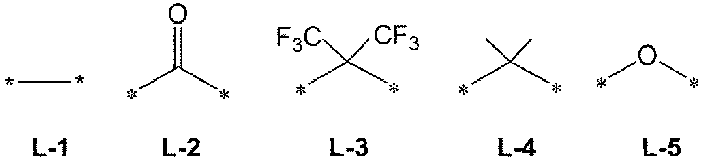

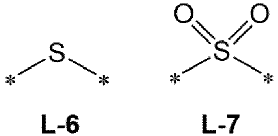

R⁴ to R⁶ may be each independently selected from the group consisting of hydrogen, an alkyl group having 1 to 10 carbon atoms (for example, a methyl group, an ethyl group, a propyl group and the like) and an alkyloxy group having 1 to 10 carbon atoms (for example, a methoxy group, an ethoxy group and the like) . When R⁴ to R⁶ are the alkyl group or the alkyloxy group, the molecular weight may be readily controlled, and a polysiloxane copolymer having wide molecular weight distribution may be provided. In addition, the silanol group (Si-OH) bonding to the siloxane polymer may be favorably capped, and a polysiloxane copolymer having excellent stability may be provided.

R⁷ may be hydrogen, and R⁸ may be a hydroxyl group. When R⁷ is hydrogen and R⁸ is a hydroxyl group, the polysiloxane copolymer has an amic acid structure, and a polysiloxane copolymer having excellent heat resistance may be provided.

L² may be selected from the group consisting of an alkylene group having 1 to 10 carbon atoms, an alkenylene group having 2 to 10 carbon atoms, a cycloalkylene group having 3 to 10 carbon atoms and an arylene group having 6 to 10 carbon atoms. Specifically, when considering synthetic readiness of the silane-based monomer, L² may be selected from the group consisting of structures represented by the following L-6 to L-22 (* means a substituent bonding position).

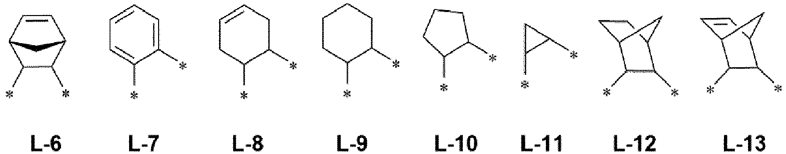

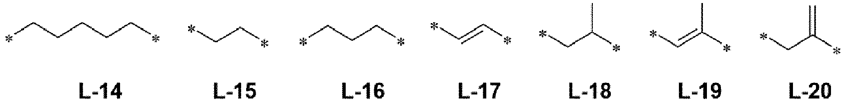

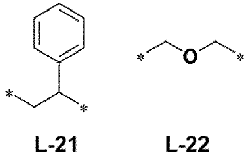

Such R¹ to R⁸, X¹ to X³, L¹ and L² (specifically, hydrogen bonding to a carbon atom of R¹ to R⁸, X¹ to X³, L¹ and L²) may be each independently unsubstituted or substituted with one or more substituents selected from the group consisting of an oxygen atom, a fluorine atom, an aliphatic hydrocarbon group having 1 to 10 carbon atoms (for example, an alkyl group having 1 to 10 carbon atoms, an alkylene group having 1 to 10 carbon atoms, an alkyloxy group having 1 to 10 carbon atoms and the like) and an aromatic hydrocarbon group having 3 to 20 carbon atoms (for example, a heteroaryl group having 3 to 20 carbon atoms, an aryl group having 6 to 20 carbon atoms and the like) .

The silane-based monomer selected from the group consisting of such compounds represented by Chemical Formula 1 to Chemical Formula 3 may be specifically selected from the group consisting of compounds represented by the following S-1 to S-162.

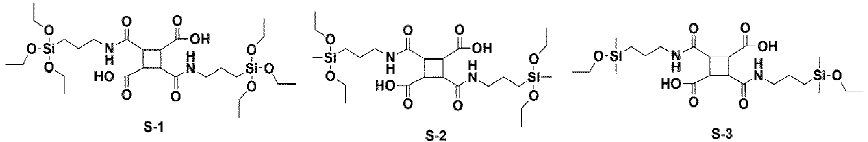

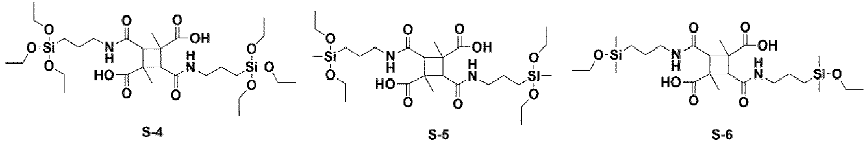

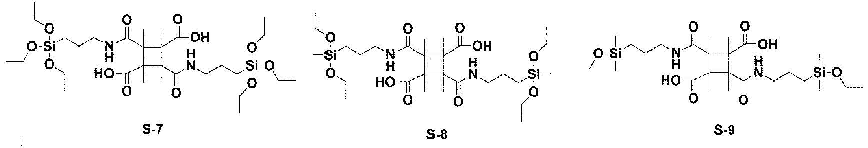

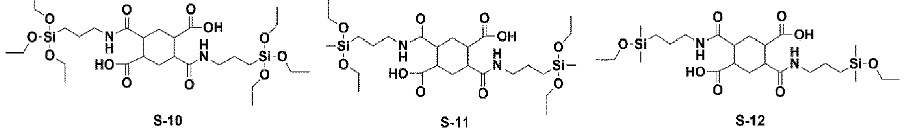

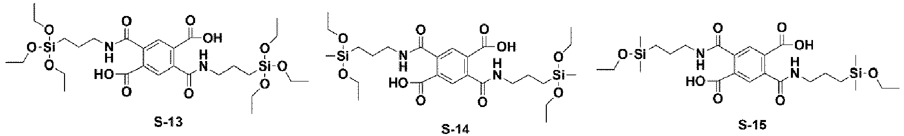

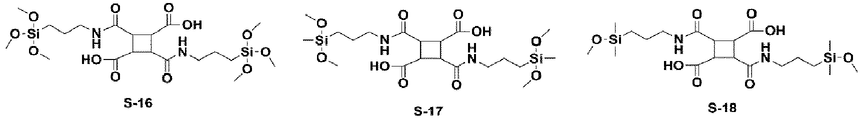

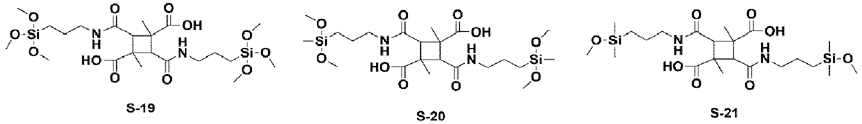

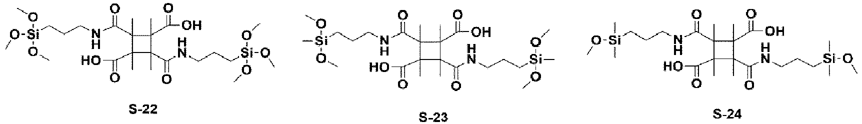

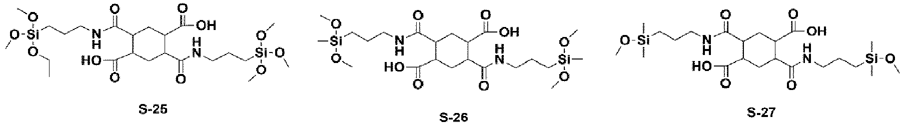

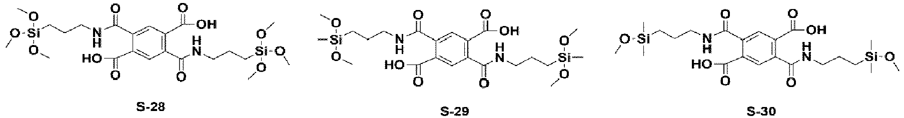

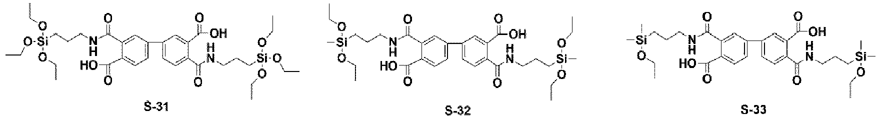

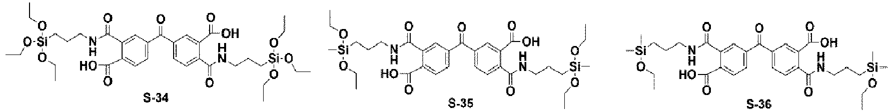

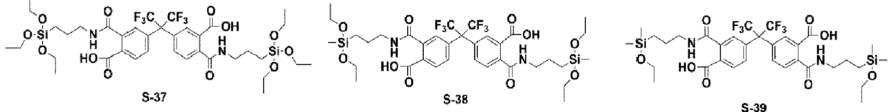

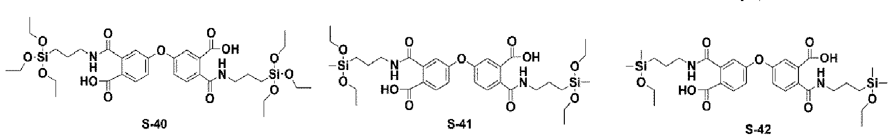

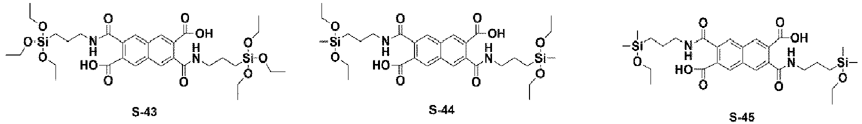

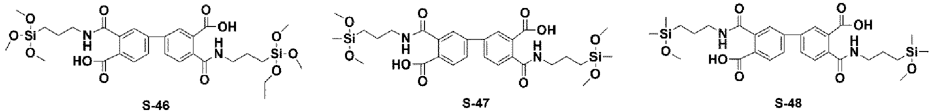

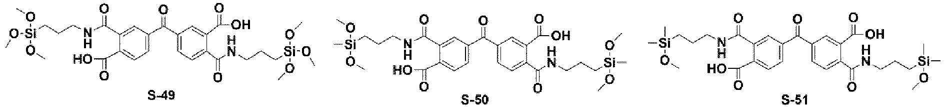

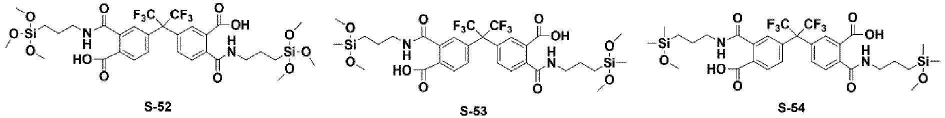

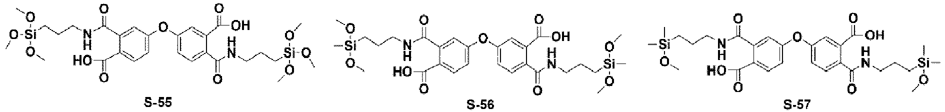

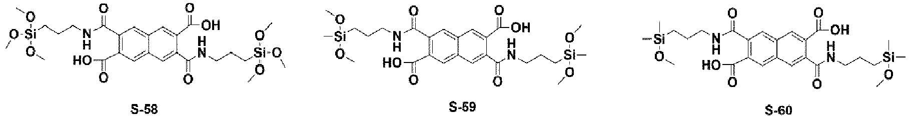

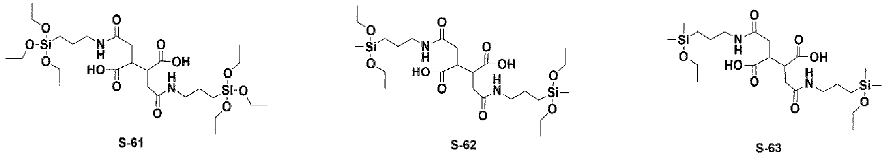

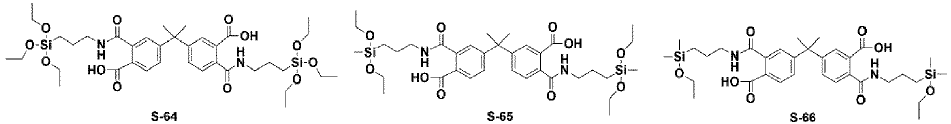

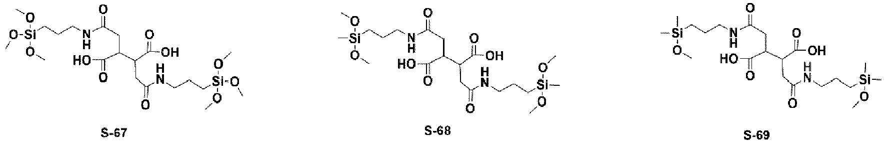

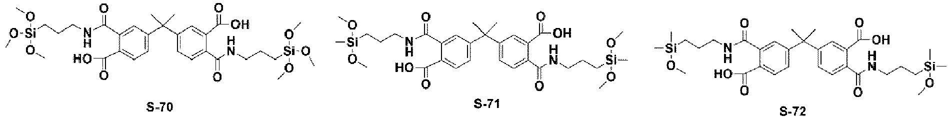

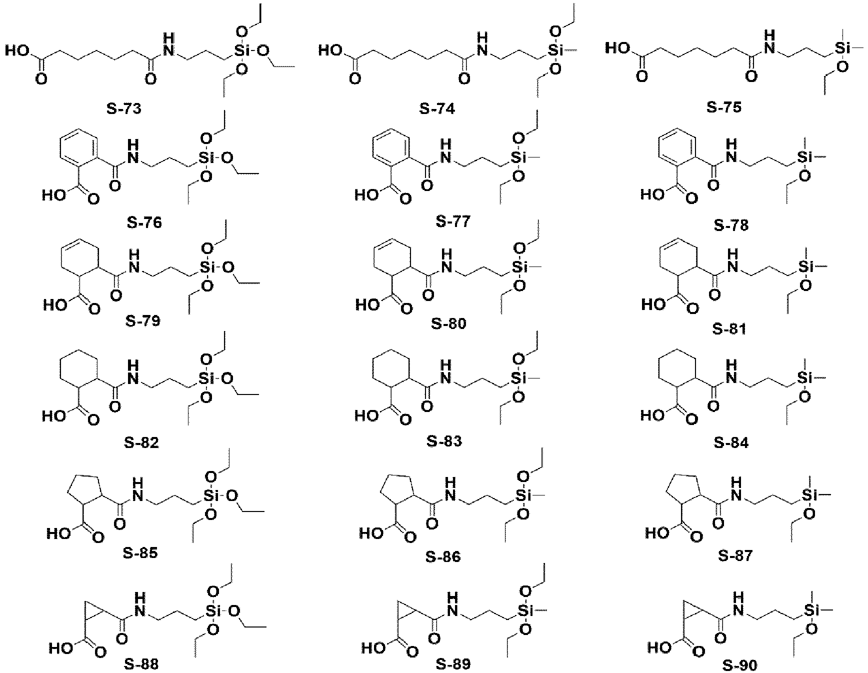

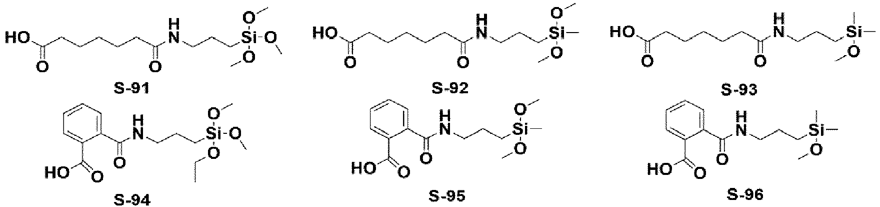

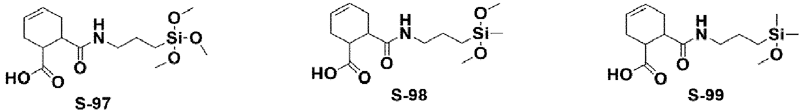

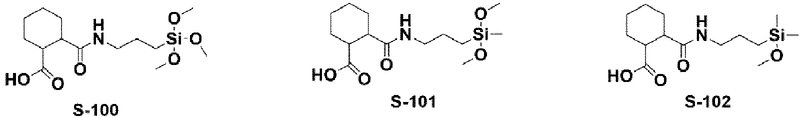

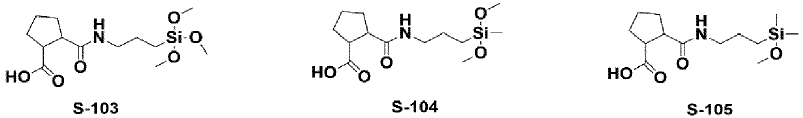

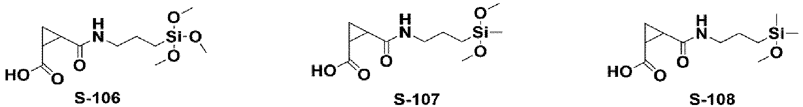

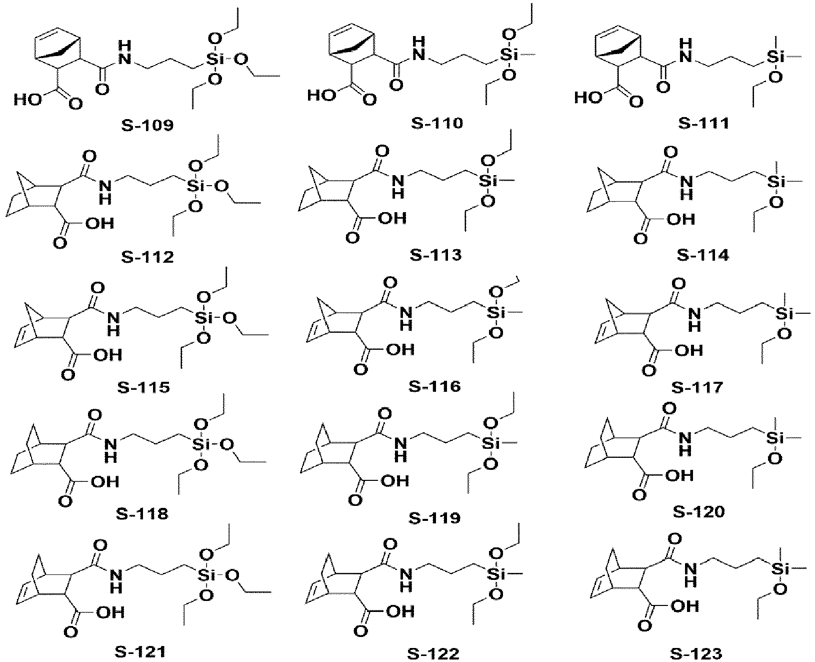

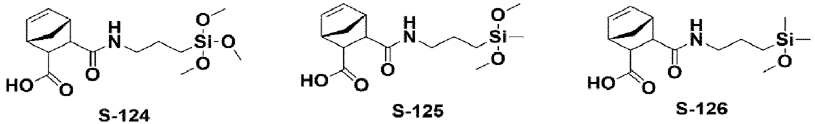

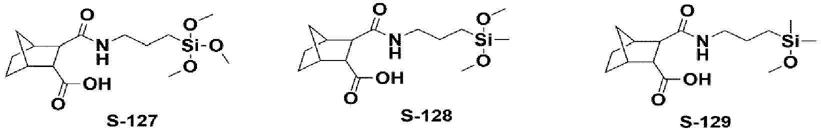

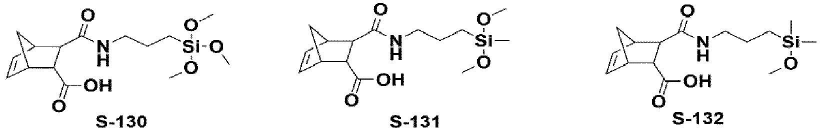

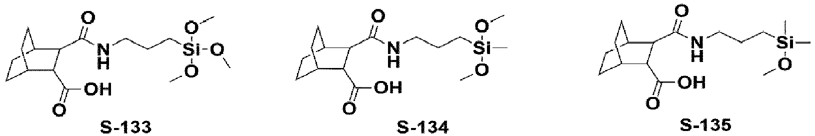

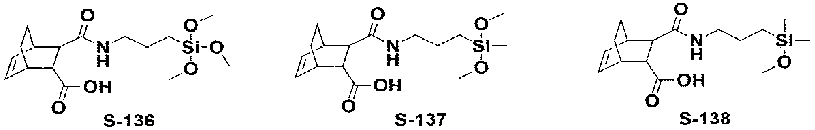

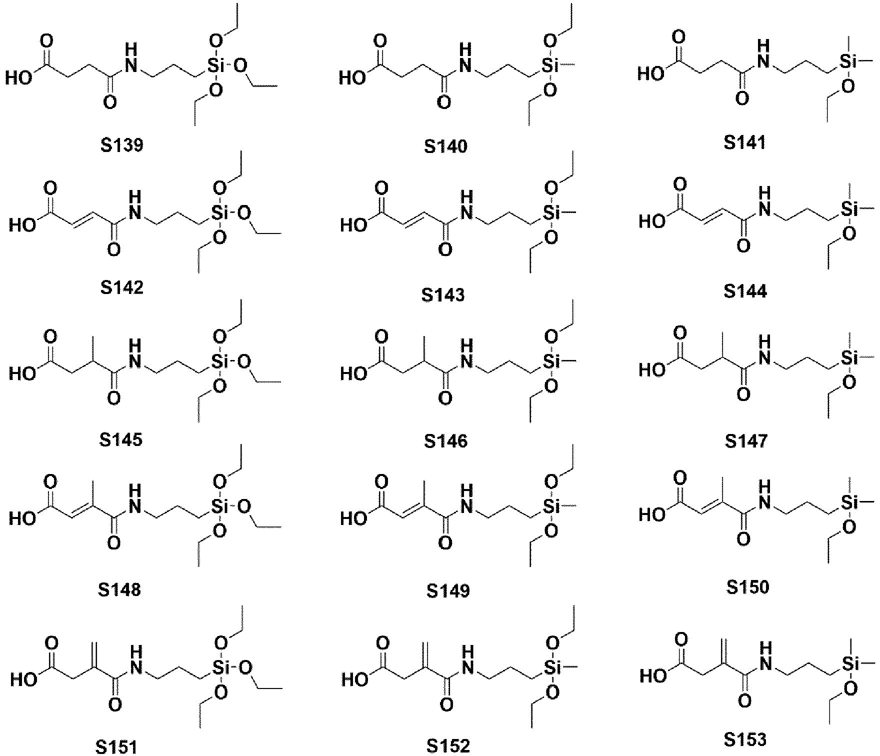

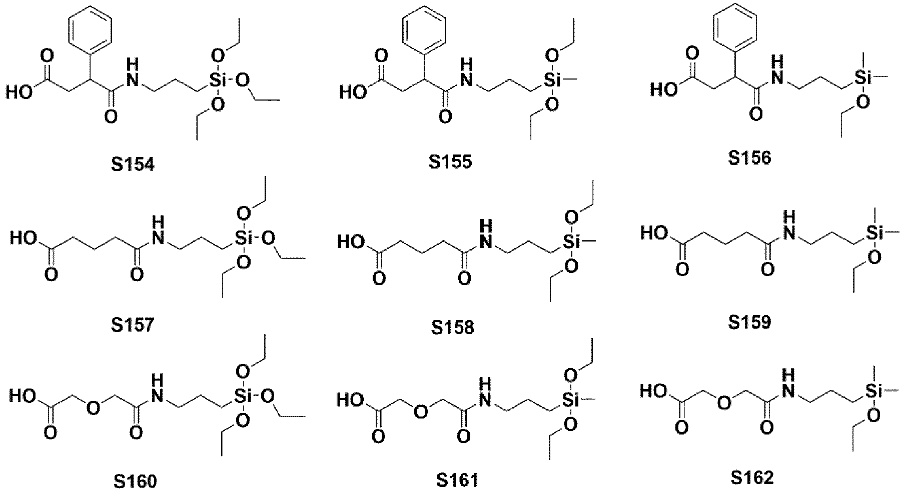

The siloxane-based polymer-derived structural unit included in the polysiloxane copolymer according to one embodiment of the present invention increases heat resistance and durability (mechanical strength) of the polysiloxane copolymer, and the siloxane-based polymer may be obtained through a commonly known reaction of a silane compound (polymer of silane compound). Herein, the silane compound (first silane compound) will be specifically described in a preparation method to describe later.

The polysiloxane copolymer according to one embodiment of the present invention may have wide molecular weight distribution, and may be used as materials in various fields. Specifically, the polysiloxane copolymer according to one embodiment of the present invention has a weight average molecular weight in a 2,000 to 200,000 range, and therefore, may be used as a print circuit board material (for example, planarization film (PL) material, partition wall (PDL) material, main substrate material) or a cover film material that needs to have a weight average molecular weight in a 10,000 to 100,000 range. In addition, the polysiloxane copolymer may also be used as a photosensitive material that needs to have a weight average molecular weight in a 2,000 to 20,000 range.

In addition, the polysiloxane copolymer according to one embodiment of the present invention may have an acid value of 10 KOHmg/g to 200 KOHmg/g, and specifically 20 KOHmg/g to 100 KOHmg/g.

The present invention provides a method for preparing the polysiloxane copolymer described above, and specific descriptions thereon are as follows.

The method for preparing the polysiloxane copolymer according to one embodiment of the present invention may include preparing a first silane compound (hereinafter, refer to as 'step A-1'); preparing a silane-based monomer by reacting a second silane compound and an anhydride-based compound (hereinafter, refer to as 'step A-2'); and reacting the first silane compound the silane-based monomer at the same time (hereinafter, refer to as 'step A-3'). Specifically, the method for preparing the polysiloxane copolymer according to one embodiment of the present invention prepares the polysiloxane copolymer by simultaneously going through a polymerization reaction of the first silane compound and a bonding reaction of the silane-based monomer.

The first silane compound in the step A-1 may be a commonly known compound having a silane group. Specifically, the first silane compound may be one or more types selected from the group consisting of trimethylmethoxysilane, triethylmethoxysilane, trimethylethoxysilane, triethylethoxysilane, trimethylpropoxysilane, triethylpropoxysilane, trimethylbutoxysilane, triethylbutoxysilane, dimethyldimethoxysilane, diethyldimethoxysilane, dimethyldiethoxysilane, diethyldiethoxysilane, methyltrimethoxysilane, ethyltrimethoxysilane, propyltrimethoxysilane, methyltriethoxysilane, ethyltriethoxysilane, propyltriethoxysilane, tetramethoxysilane, tetraethoxysilane, tetrapropoxysilane, tetrabutoxysilane, phenyltrimethoxysilane, diphenyldimethoxysilane, phenyltriethoxysilane, diphenyldiethoxysilane, vinyltrimethoxysilane, vinyltriethoxysilane, 3-acryloxypropyltrimethoxysilane, 3-acryloxypropyltriethoxysilane, 3-trimethoxysilylpropyl methacrylate, 3-triethoxysilylpropyl methacrylate, 3-glycidoxypropyltrimethoxysilane, 3-glycidoxypropyltriethoxysilane and vinyltripropoxysilane.

The step A-2 may be a step of reacting a second silane compound and an anhydride-based compound to prepare a silane-based monomer selected from the group consisting of compounds represented by the following Chemical Formula 1 to Chemical Formula 3. Herein, descriptions on Chemical Formula 1 to Chemical Formula 3 are the same as the descriptions provided above, and will not be repeated.

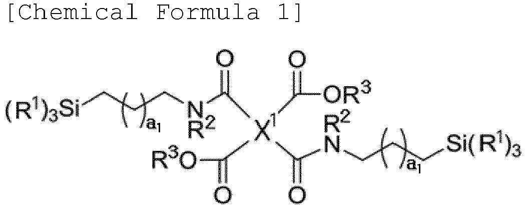

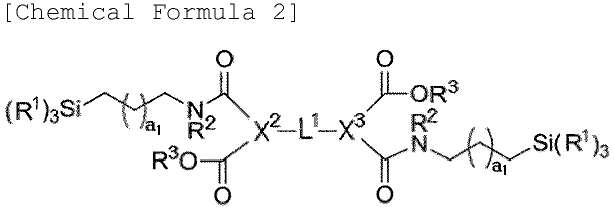

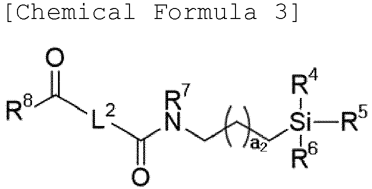

The second silane compound for preparing such a silane-based monomer may be one or more types selected from the group consisting of 3-aminopropyldimethylethoxysilane, 3-aminopropyldimethylmethoxysilane, 3-aminopropylmethyldimethoxysilane, 3-aminopropylmethyldiethoxysilane, 3-aminopropyltriethoxysilane, 3-aminopropyltrimethoxysilane, 3-aminopropyldimethoxymonomethylsilane and 3-aminopropyldiethoxymonomethylsilane.

In addition, the anhydride-based compound for preparing the silane-based monomer may be one or more types selected from the group consisting of a dianhydride represented by the following structures, or a commonly known anhydride. Specifically, the anhydride-based compound may be one or more types selected from the group consisting of cyclobutane dianhydride, cyclohexane dianhydride, pyromellitic dianhydride, 3,3',4,4'-biphenyltetracarboxylic dianhydride, 3,3',4,4'-benzophenonetetracarboxylic dianhydride, 4,4-(hexafluoroisopropylidene) diphthalic anhydride, maleic anhydride, succinic anhydride, phthalic anhydride, benzoic anhydride and acetic anhydride.

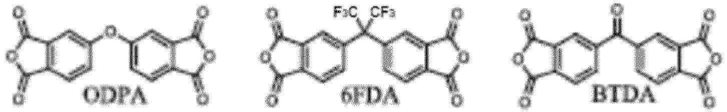

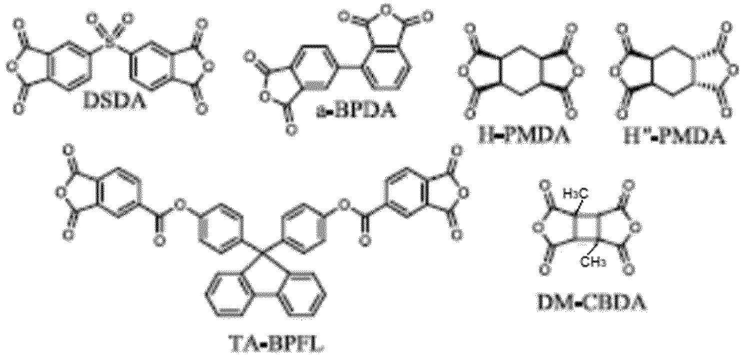

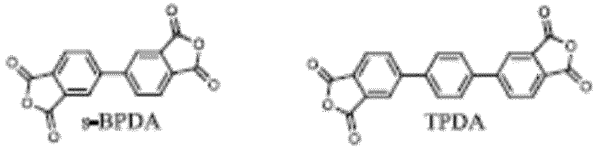

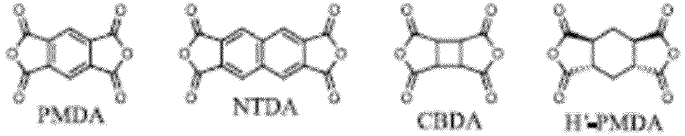

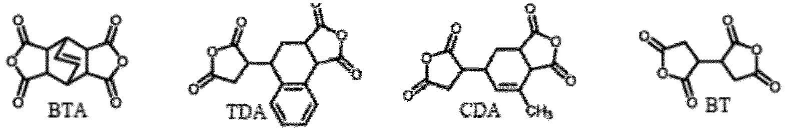

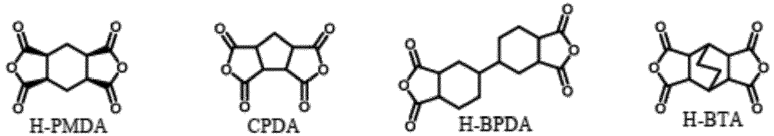

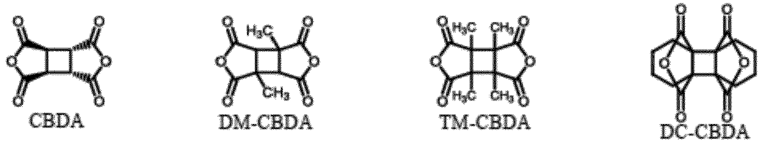

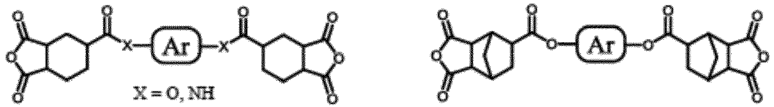

In the step A-2, when considering a yield of the silane-based monomer, the second silane compound (a) and the anhydride-based compound (b) may have a reaction ratio (a:b) of 1:1 to 2:1 in an equivalent ratio.

In addition, in the step A-2, the second silane compound and the anhydride-based compound may react under the presence of a commonly known first organic solvent. Specifically, the first organic solvent may be one or more types selected from the group consisting of methanol, ethanol, 1-propanol, 2-propanol, 1-butanol, 2-butanol, 2-methyl-1-propanol, acetone, acetonitrile, tetrahydrofuran, toluene, hexane, ethyl acetate, cyclohexanone, methyl amyl ketone, butanediol monomethyl ether, propylene glycol monomethyl ether, ethylene glycol monomethyl ether, butanediol monoethyl ether, propylene glycol monoethyl ether, ethylene glycol monoethyl ether, propylene glycol dimethyl ether, diethylene glycol dimethyl ether, propylene glycol monomethyl ether acetate, propylene glycol monoethyl ether acetate, ethyl pyruvate, butyl acetate, methyl 3-methoxypropionate, ethyl 3-ethoxypropionate, t-butyl acetate, t-butyl propionate, propylene glycol mono-t-butyl ether acetate and γ-butyrolactone.

The step A-3 may be a step of introducing the first silane compound and the silane-based monomer, a reaction material of the second silane compound and the anhydride-based compound, and simultaneously reacting the result to prepare the polysiloxane copolymer. Herein, as the first silane compound, two or more types of different silane compounds, specifically, three types of different silane compounds, among the above-described first silane compounds may be introduced to the reactor. When using three types of silane compounds herein, the amount of each of the silane compounds used may each be from 1 parts by weight to 80 parts by weight, and specifically, may each be from 5 parts by weight to 40 parts by weight or from 5 parts by weight to 30 parts by weight based on a total weight of the first silane compound. In addition, as the silane-based monomer, a compound including a divalent to tetravalent methoxy group or ethoxy group (silane-based monomer) among the compounds represented by Chemical Formula 1 to Chemical Formula 3 may be introduced to the reactor. Herein, the silane-based monomer may be introduced to the reactor either in a solid powder form or in a form diluted with the first organic solvent.

In the step A-3, the amount of the silane-based monomer used may be from 0.1 mol% to 50 mol%, specifically from 0.5 mol% to 20 mol% and more specifically from 1 mol% to 10 mol% based on a total weight of the first silane compound.

In addition, in the step A-3, the first silane compound and the silane-based monomer may have a reaction temperature (polymerization temperature) of 0°C to 120°C, and specifically 60°C to 100°C.

In the step A-3, the first silane compound and the silane-based monomer may react under the presence of an acidic catalyst or a basic catalyst. The acidic catalyst may be a commonly known inorganic acid, aliphatic sulfonic acid or aromatic sulfonic acid. Specifically, the acidic catalyst may be one or more types selected from the group consisting of oxalic acid, hydrofluoric acid, hydrochloric acid, hydrobromic acid, sulfuric acid, nitric acid, perchloric acid, phosphoric acid, methanesulfonic acid, benzenesulfonic acid and toluenesulfonic acid. The basic catalyst may be a commonly known organic base, inorganic base or quaternary ammonium salt. Specifically, the basic catalyst may be one or more types selected from the group consisting of an organic base such as triethylamine, tripropylamine, tributylamine, tripentylamine, trihexylamine, triheptylamine, trioctylamine, diethylamine, triethanolamine or diethanolamine; an inorganic base such as sodium hydroxide, potassium hydroxide or cerium hydroxide; and a quaternary ammonium salt such as tetrabutylammonium hydroxide, tetraethylammonium hydroxide or tetramethylammonium hydroxide.

The amount of such an acidic catalyst or a basic catalyst used may be from 10⁻⁵ mol to 10 mol, and specifically from 10⁻⁴ mol to 1 mol based on 1 mol of the first silane compound.

In addition, in the step A-3, the first silane compound and the silane-based monomer may react under the presence of a commonly known second organic solvent. The second organic solvent may be one or more types selected from the group consisting of methanol, ethanol, 1-propanol, 2-propanol, 1-butanol, 2-butanol, 2-methyl-1-propanol, acetone, acetonitrile, tetrahydrofuran, toluene, hexane, ethyl acetate, cyclohexanone, methyl amyl ketone, butanediol monomethyl ether, propylene glycol monomethyl ether, ethylene glycol monomethyl ether, butanediol monoethyl ether, propylene glycol monoethyl ether, ethylene glycol monoethyl ether, propylene glycol dimethyl ether, diethylene glycol dimethyl ether, propylene glycol monomethyl ether acetate, propylene glycol monoethyl ether acetate, ethyl pyruvate, butyl acetate, methyl 3-methoxypropionate, ethyl 3-ethoxypropionate, t-butyl acetate, t-butyl propionate, propylene glycol mono-t-butyl ether acetate and γ-butyrolactone.

The amount of such a second organic solvent used may be from 0 mL to 1,000 mL, and specifically from 0 mL to 500 mL based on 1 mol of the first silane compound.

The reaction material of the first silane compound and the silane-based monomer obtained in the step A-3 may go through a process of washing. Specifically, the reaction material is washed with deionized water, and herein, the amount of the deionized water used may be from 1 time to 20 times, and specifically 2 times to 5 times of the reaction material. In such a washing process, a commonly known organic solvent that is not mixed with the deionized water may be introduced to smoothly separate the aqueous layer. The washing process may be repeated approximately 1 time to 5 times, and the polysiloxane copolymer according to one embodiment of the present invention may be obtained after going through such a washing process.

The polysiloxane copolymer prepared using the method for preparing the polysiloxane copolymer according to one embodiment of the present invention may include one or more types selected from the group consisting of structural units (repeating units) represented by the following Chemical Formula 4 to Chemical Formula 6.

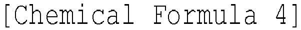

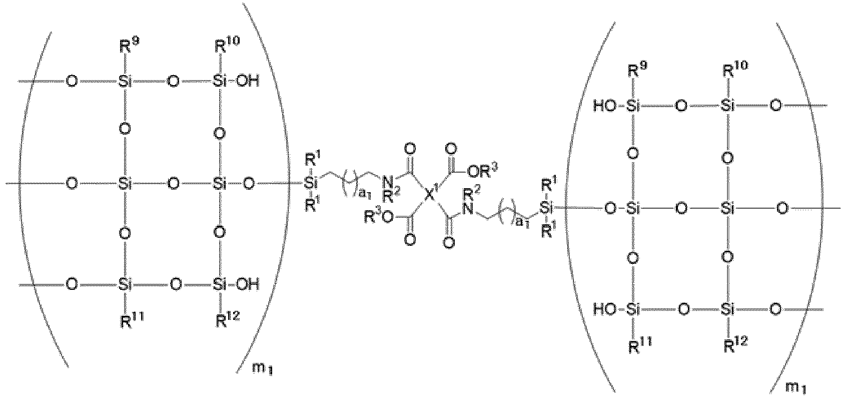

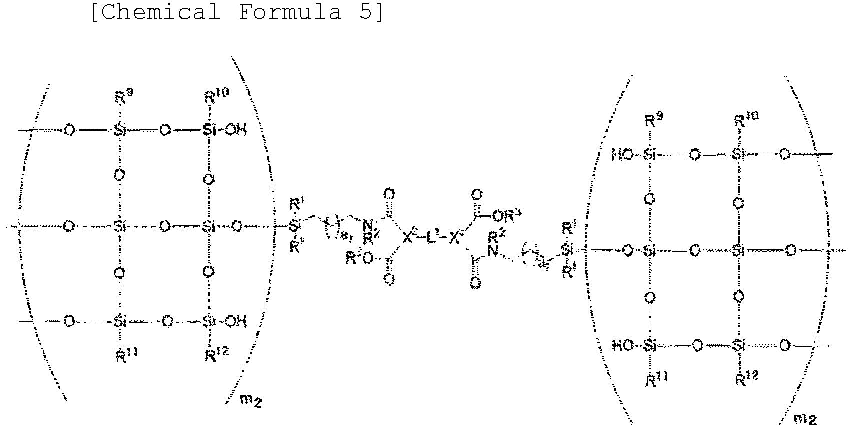

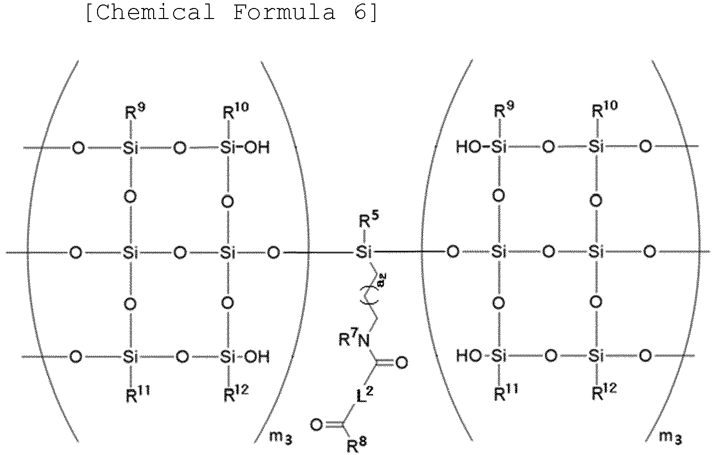

In Chemical Formula 4 to Chemical Formula 6, descriptions on R¹ to R³, R⁵, R⁷, R⁸, X¹ to X³, L¹, L², a₁ and a₂ are the same as the descriptions provided above, R⁹ to R¹² are each independently selected from the group consisting of an aliphatic hydrocarbon group having 1 to 10 carbon atoms and an aromatic hydrocarbon group having 3 to 20 carbon atoms, and m₁ to m₃ may each be an integer of 1 to 100.

Specifically, R⁹ to R¹² may be each independently an alkyl group having 1 to 10 carbon atoms (for example, a methyl group, an ethyl group, a propyl group, a butyl group and the like), a heteroaryl group having 3 to 10 carbon atoms or an aryl group having 6 to 10 carbon atoms (for example, a phenyl group, a naphthyl group and the like).

Meanwhile, the method for preparing the polysiloxane copolymer according to one embodiment of the present invention may further include chemically or thermally imidizing the reaction material of the first silane compound and the silane-based monomer obtained in the step A-3. When imidizing the reaction material, a condensation reaction may occur to add a ring structure (for example, 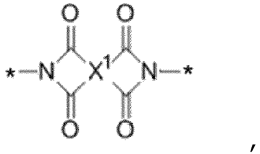 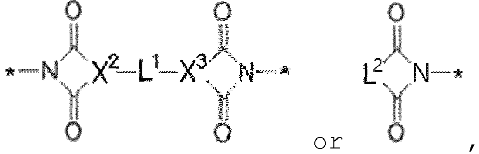 herein, descriptions on X¹ to X³, L¹ and L² are the same as the descriptions provided above) in the molecule. By imidizing (condensation reaction) the reaction material as above, a polysiloxane copolymer having more superior heat resistance may be provided.

In addition, the method for preparing the polysiloxane copolymer according to one embodiment of the present invention may further include introducing acetal to the reaction material of the first silane compound and the silane-based monomer obtained in the step A-3 or the condensed reaction material obtained by imidizing the reaction material. The acetal may be introduced using a commonly known method. By introducing the acetal to the reaction material or the condensed reaction material, the hydroxyl group (-OH) present in the molecule decreases, and a polysiloxane copolymer having more superior stability may be provided.

A method for preparing the polysiloxane copolymer according to another embodiment of the present invention may include preparing a siloxane-based polymer by reacting a first silane compound (hereinafter, refer to as 'step B-1'); preparing a silane-based monomer by reacting a second silane compound and an anhydride-based compound (hereinafter, refer to as 'step B-2'); and reacting the siloxane-based polymer and the silane-based monomer (hereinafter, refer to as 'step B-3'). Specifically, the method for preparing the polysiloxane copolymer according to another embodiment of the present invention firstly prepares a siloxane-based polymer by going through a polymerization reaction of a first silane compound, and then secondly prepares a polysiloxane copolymer by going through a bonding reaction of the siloxane-based polymer and a silane-based monomer (one-pot reaction).

The step B-1 may be a step of preparing a siloxane-based polymer by polymerization reacting a first silane compound. Herein, the first silane compound may be two or more types of different silane compounds, and specifically, three types of different silane compounds. In other words, the siloxane-based polymer in the step B-1 may be a siloxane-based polymer obtained by polymerizing two or more types of different silane compounds. Descriptions on the first silane compound used herein are the same as the descriptions on the first silane compound in the step A-1, and will not be repeated. When using three types of silane compounds herein, the amount of each of the silane compounds used may each be from 1 parts by weight to 80 parts by weight, and specifically from 5 parts by weight to 40 parts by weight or from 5 parts by weight to 30 parts by weight based on a total weight of the first silane compound.

In the step B-1, the first silane compound may have a reaction temperature (polymerization temperature) of 0°C to 120°C, and specifically 60°C to 100°C.

In addition, in the step B-1, the first silane compound may react under the presence of an acidic catalyst or a basic catalyst. Descriptions on the acidic catalyst or the basic catalyst are the same as the descriptions on the acidic catalyst or the basic catalyst in the step A-3, and will not be repeated.

In addition, in the step B-1, the first silane compound may react under the present of a third organic solvent. Descriptions on the third organic solvent are the same as the descriptions on the second organic solvent in the step A-3, and will not be repeated.

The step B-2 may be a step of reacting a second silane compound and an anhydride-based compound to prepare a silane-based monomer selected from the group consisting of compounds represented by the following Chemical Formula 1 to Chemical Formula 3. Herein, descriptions on Chemical Formula 1 to Chemical Formula 3 are the same as the descriptions provided above, and will not be repeated.

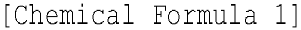

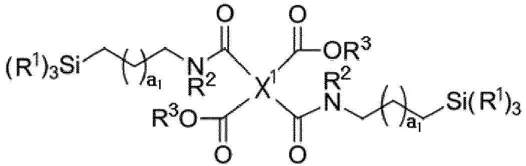

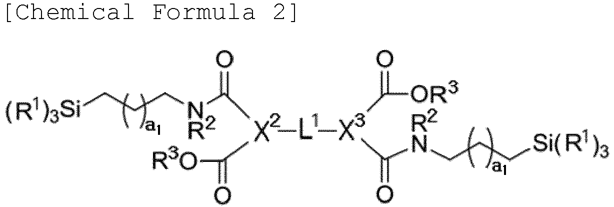

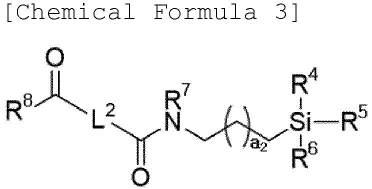

Descriptions on the second silane compound and the anhydride-based compound for preparing the silane-based monomer are the same as the descriptions on the second silane compound and the anhydride-based compound in the step A-2, and will not be repeated.

In addition, in the step B-2, descriptions on the reaction ratio and the reaction condition of the second silane compound and the anhydride-based compound are also the same as the descriptions provided in the step A-2, and will not be repeated.

The step B-3 may be a step of reacting the siloxane-based polymer, a reaction material of the first silane compound, and the silane-based monomer, a reaction material of the second silane compound and the anhydride-based compound, to prepare the polysiloxane copolymer. Herein, as the silane-based monomer, a compound including a divalent to tetravalent methoxy group or ethoxy group (silane-based monomer) among the compounds represented by Chemical Formula 1 to Chemical Formula 3 may be used. In addition, the silane-based monomer may be introduced to the reactor either in a solid powder form or in a form diluted with the first organic solvent described above, and may be introduced slowly in order to prevent gelation or a rapid increase in the molecular weight.

In the step B-3, the amount of the silane-based monomer used may be from 0.1 mol% to 50 mol%, specifically from 0.5 mol% to 20 mol% and more specifically from 1 mol% to 10 mol% based on a total weight of the first silane compound.

In addition, in the step B-3, the siloxane-based polymer and the silane-based monomer may have a reaction temperature (polymerization temperature) of 0°C to 120°C, and specifically 60°C to 100°C.

In the step B-3, the siloxane-based polymer and the silane-based monomer may react under the presence of a fourth organic solvent. The fourth organic solvent may be one or more types selected from the group consisting of methanol, ethanol, 1-propanol, 2-propanol, 1-butanol, 2-butanol, 2-methyl-1-propanol, acetone, acetonitrile, tetrahydrofuran, toluene, hexane, ethyl acetate, cyclohexanone, methyl amyl ketone, butanediol monomethyl ether, propylene glycol monomethyl ether, ethylene glycol monomethyl ether, butanediol monoethyl ether, propylene glycol monoethyl ether, ethylene glycol monoethyl ether, propylene glycol dimethyl ether, diethylene glycol dimethyl ether, propylene glycol monomethyl ether acetate, propylene glycol monoethyl ether acetate, ethyl pyruvate, butyl acetate, methyl 3-methoxypropionate, ethyl 3-ethoxypropionate, t-butyl acetate, t-butyl propionate, propylene glycol mono-t-butyl ether acetate and γ-butyrolactone.

The reaction material of the siloxane-based polymer and the silane-based monomer obtained in the step B-3 may go through a process of washing. Specifically, the reaction material is washed with deionized water, and herein, the amount of the deionized water used may be from 1 time to 20 times, and specifically 2 times to 5 times of the reaction material. In such a washing process, a commonly known organic solvent that is not mixed with the deionized water may be introduced to smoothly separate the aqueous layer. The washing process may be repeated approximately 1 time to 5 times, and the polysiloxane copolymer according to another embodiment of the present invention may be obtained after going through such a washing process.

The polysiloxane copolymer prepared using the method for preparing the polysiloxane copolymer according to another embodiment of the present invention may include one or more types selected from the group consisting of structural units (repeating units) represented by the following Chemical Formula 7 to Chemical Formula 9.

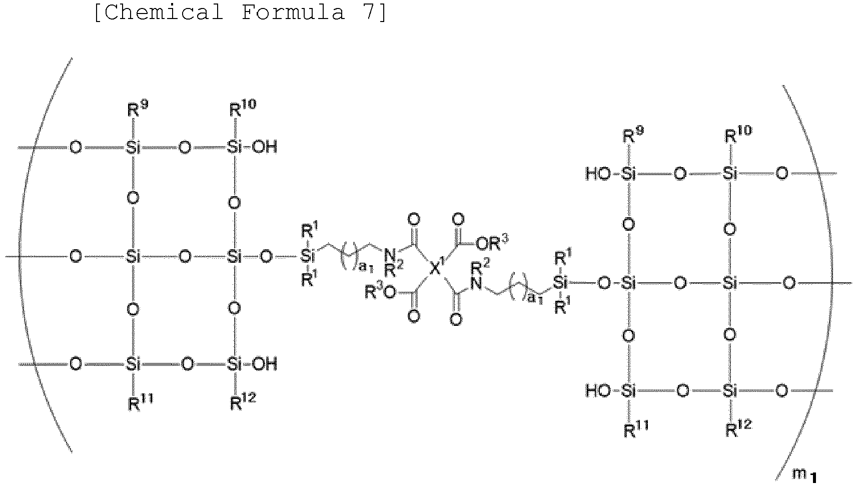

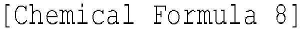

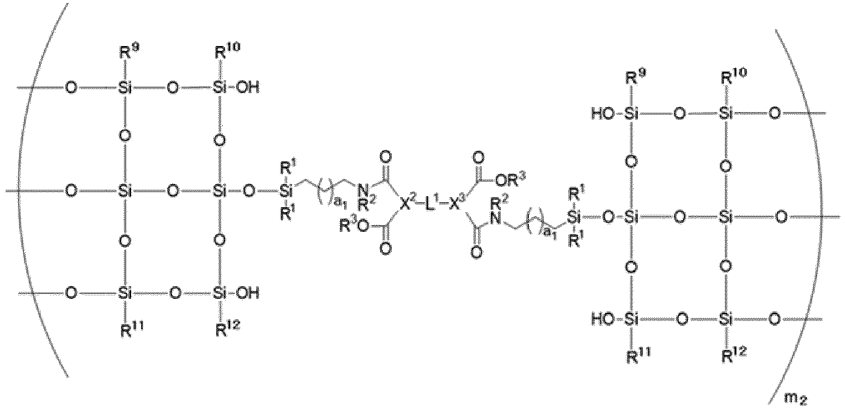

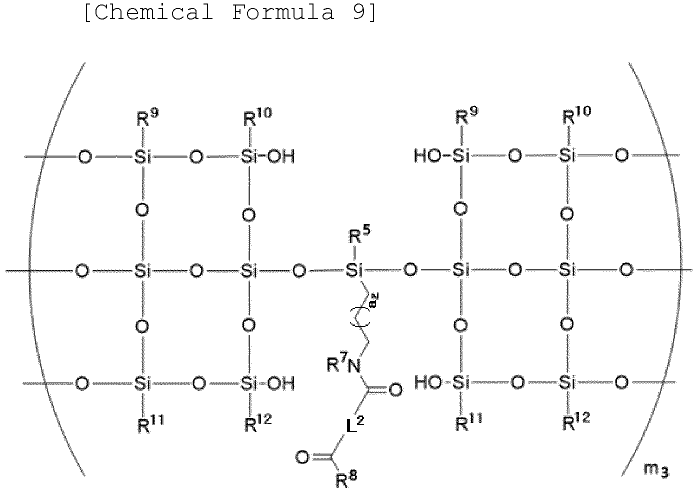

In Chemical Formula 7 to Chemical Formula 9,
descriptions on R¹ to R³, R⁵, R⁷, R⁸, X¹ to X³, L¹, L², a₁ and a₂ are the same as the descriptions provided above, R⁹ to R¹² are each independently selected from the group consisting of an aliphatic hydrocarbon group having 1 to 10 carbon atoms and an aromatic hydrocarbon group having 3 (4 when including a heteroatom such as N, O or S) to 20 carbon atoms, and m₁ to m₃ may each be an integer of 1 to 100.

Specifically, R⁹ to R¹² may be each independently an alkyl group having 1 to 10 carbon atoms (for example, a methyl group, an ethyl group, a propyl group, a butyl group and the like), a heteroaryl group having 3 to 10 carbon atoms or an aryl group having 6 to 10 carbon atoms (for example, a phenyl group, a naphthyl group and the like).

Meanwhile, the method for preparing the polysiloxane copolymer according to another embodiment of the present invention may further include chemically or thermally imidizing the reaction material of the siloxane-based polymer and the silane-based monomer obtained in the step B-3. When imidizing the reaction material, a condensation reaction may occur to add a ring structure (for example, 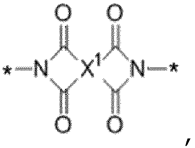 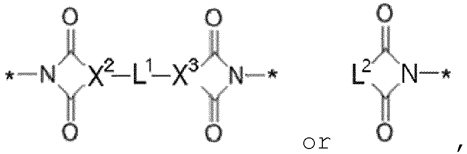 herein, descriptions on X¹ to X³, L¹ and L² are the same as the descriptions provided above) in the molecule. By imidizing (condensation reacting) the reaction material as above, a polysiloxane copolymer having more superior heat resistance may be provided.

In addition, the method for preparing the polysiloxane copolymer according to another embodiment of the present invention may further include introducing acetal to the reaction material of the siloxane-based polymer and the silane-based monomer obtained in the step B-3 or the condensed reaction material obtained by imidizing the reaction material. The acetal may be introduced using a commonly known method. By introducing the acetal to the reaction material or the condensed reaction material, the hydroxyl group (-OH) present in the molecule decreases, and a polysiloxane copolymer having more superior stability may be provided.

The present invention provides a resin composition including the polysiloxane copolymer described above, and specific descriptions thereon are as follows.

The resin composition according to one embodiment of the present invention includes a binder resin; an organic solvent; and an additive, wherein the binder resin may be the polysiloxane copolymer described above. Such a resin composition according to one embodiment of the present invention includes the polysiloxane copolymer having excellent heat resistance, flexibility, transparency, photosensitivity, durability and the like as a binder resin, and therefore, may be used (applied) when preparing a material in various fields such as an optical field and/or an electronic field. The organic solvent and the additive included in the resin composition according to one embodiment of the present invention may be commonly known organic solvent and additive.

Herein, the resin composition according to one embodiment of the present invention may further include a commonly known resin other than the above-described polysiloxane copolymer as a binder resin.

Such a resin composition according to one embodiment of the present invention may be a resin composition for preparing a print circuit board material, a resin composition for preparing a cover film material, or a resin composition for preparing a photosensitive material. Specifically, the resin composition according to one embodiment of the present invention may be a photosensitive resin composition used for preparing a photosensitive material, and specific descriptions thereon are as follows.

The photosensitive resin composition according to one embodiment of the present invention is a negative-type photosensitive resin composition, and may include the above-described polysiloxane copolymer; one or more types of functional additives selected from the group consisting of a crosslinkable compound, a photopolymerization initiator, a thermal polymerization initiator, a photosensitizer, a photoacid generator, a thermal acid generator and a crosslinking binding agent; an organic solvent; and an additive. Specifically, the photosensitive resin composition may be a first photosensitive resin composition including the polysiloxane copolymer, an organic solvent and an additive, and including, among functional additives, a crosslinkable compound and one or more types of a photopolymerization initiator and a thermal polymerization initiator; a second photosensitive resin composition including the polysiloxane copolymer, an organic solvent and an additive, and including, among functional additives, a photosensitizer; a third photosensitive resin composition including the polysiloxane copolymer, an organic solvent and an additive, and including, among functional additives, a photoacid generator; or a fourth photosensitive resin composition including the polysiloxane copolymer, an organic solvent and an additive, and, among functional additives, a thermal acid generator and a crosslinking binding agent. Descriptions on the polysiloxane copolymer included in each of such photosensitive resin compositions are the same as the descriptions provided above, and will not be repeated.

The crosslinkable compound included in the first photosensitive resin composition is a crosslinkable compound having an ethylenically unsaturated bond, and may be a crosslinkable unit having at least two or more ethylenic double bonds. Specifically, the crosslinkable compound may be one or more types selected from the group consisting of one or more types of monomers selected from the group consisting of ethylene glycol diacrylate, ethylene glycol dimethacrylate, diethylene glycol diacrylate, triethylene glycol diacrylate, triethylene glycol dimethacrylate, tetraethylene glycol diacrylate, tetraethylene glycol dimethacrylate, butylene glycol dimethacrylate, propylene glycol diacrylate, propylene glycol dimethacrylate, trimethylol propane triacrylate, trimethylol propane trimethacrylate, tetramethylol propane tetraacrylate, tetramethylol propane tetramethacrylate, pentaerythritol triacrylate, pentaerythritol trimethacrylate, pentaerythritol tetraacrylate, pentaerythritol tetramethacrylate, dipentaerythritol pentaacrylate, dipentaerythritol pentamethacrylate, dipentaerythritol hexaacrylate, dipentaerythritol hexamethacrylate, 1,6-hexanediol diacrylate, 1,6-hexanediol dimethacrylate and cardoepoxy diacrylate; a multifunctional (meth)acryl-based monomer such as poly-compound of the monomer (polyethylene glycol diacrylate); an oligomer of the monomer; polyester (meth)acrylate obtained by reacting (meth)acrylic acid with a polyester prepolymer obtained by condensing polyhydric alcohols and monobasic acids or polybasic acids; polyurethane (meth)acrylate obtained by reacting a polyol group and a compound having two isocyanate groups, and further reacting a (meth)acrylic acid therewith; and an epoxy (meth)acrylate resin obtained by reacting a (meth) acrylic acid and one or more types of epoxy resins selected from the group consisting of a bisphenol A-type epoxy resin, a bisphenol F-type epoxy resin, a bisphenol S-type epoxy resin, a phenol novolac-type epoxy resin, a cresol novolac-type epoxy resin, a resole-type epoxy resin, a triphenolmethane-type epoxy resin, polycarboxylic acid polyglycidyl ester, a polyol polyglycidyl ester, an aliphatic epoxy resin, an alicyclic epoxy resin, an amine epoxy resin and a dihydroxybenzene-type epoxy resin. Specifically, when considering exposure sensitivity and the like, the crosslinkable compound may be a multifunctional (meth)acryl-based monomer.

The content of such a crosslinkable compound may be from 10 parts by weight to 200 parts by weight, and specifically from 30 parts by weight to 150 parts by weight with respect to 100 parts by weight of the polysiloxane copolymer, a binder resin. When the crosslinkable compound content is within the above-mentioned range, sufficient curing with the polysiloxane copolymer may be obtained leading to favorable pattern formation, and hardness and resolution of the formed pattern may increase.

The photopolymerization initiator included in the first photosensitive resin composition may perform a role of generating active species capable of initiating polymerization of the polysiloxane copolymer, a binder resin, by visible rays, ultraviolet rays, far ultraviolet rays, charged particle rays, X-rays and the like. Such a photopolymerization initiator may be one or more types selected from the group consisting of an oxime ester-based compound, a biimidazole-based compound, a benzoin-based compound, an acetophenone-based compound, a benzophenone-based compound, an alpha-diketone-based compound, a polynuclear quinone-based compound, a phosphine-based compound and a triazine-based compound, and specifically, may be an acetophenone-based compound or an oxime ester-based compound.

The oxime ester-based compound has very high exposure sensitivity, has excellent pattern stability after a development process and forms a stable development pattern even with a small exposure amount, and in addition thereto, has excellent adhesion with a substrate, light blocking property and insulating property, and may have increased flatness due to having no residues. Such an oxime ester-based compound may be 1-[9-ethyl-6-(2-methylbenzoyl)-9H-carbazol-3-yl]-1-(O-acetyloxime), 1,3-octanedione-1[(4-phenylthio)phenyl]2-benzoyl-oxime or the like.

The acetophenone-based compound may further increase strength of a thin film. Such an acetophenone-based compound may be an alpha-hydroxyketone-based compound, an alpha-aminoketone-based compound or the like. The alpha-hydroxyketone-based compound may be 1-phenyl-2-hydroxy-2-methylpropan-1-one, 1-(4-i-propylphenyl)-2-hydroxy-2-methylpropan-1-one, 4-(2-hydroxyethoxy)phenyl-(2-hydroxy-2-propyl)ketone, 1-hydroxycyclohexylphenylketone or the like. The alpha-aminoketone-based compound may be 2-methyl-1-[4-(methylthio)phenyl]-2-morpholinopropan-1-one, 2-benzyl-2-dimethylamino-1-(4-morpholinophenyl)-butanone-1 or the like. In addition thereto, the acetophenone-based compound may be 2,2-dimethoxyacetophenone, 2,2-diethoxyacetophenone, 2,2-dimethoxy-2-phenylacetophenone or the like. Such an acetophenone-based compound may be used either alone or as a mixture of two or more types.

The biimidazole-based compound may be 2,2'-bis(2-chlorophenyl)-4,4',5,5'-tetrakis(4-ethoxycarbonylphenyl)-1,2'-biimidazole, 2,2'-bis(2-bromophenyl)-4,4',5,5'-tetrakis(4-ethoxycarbonylphenyl)-1,2'-biimidazole, 2,2'-bis(2-chlorophenyl)-4,4',5,5'-tetraphenyl-1,2'-biimidazole, 2,2'-bis(2,4-dichlorophenyl)-4,4',5,5'-tetraphenyl-1,2'-biimidazole, 2,2'-bis(2,4,6-trichlorophenyl)-4,4',5,5'-tetraphenyl-1,2'-biimidazole, 2,2'-bis(2-bromophenyl)-4,4',5,5'-tetraphenyl-1,2'-biimidazole, 2,2'-bis(2,4-dibromophenyl)-4,4',5,5'-tetraphenyl-1,2'-biimidazole, 2,2'-bis(2,4,6-tribromophenyl)-4,4',5,5'-tetraphenyl-1,2'-biimidazole or the like, and specifically, may be 2,2'-bis(2-chlorophenyl)-4,4',5,5'-tetraphenyl-1,2'-biimidazole, 2,2'-bis(2,4-dichlorophenyl)-4,4',5,5'-tetraphenyl-1,2'-biimidazole or 2,2'-bis(2,4,6-trichlorophenyl)-4,4',5,5'-tetraphenyl-1,2'-biimidazole, and more specifically, may be 2,2'-bis(2,4-dichlorophenyl)-4,4',5,5'-tetraphenyl-1,2'-biimidazole.

The content of such a photopolymerization initiator may be from 1 parts by weight to 20 parts by weight, specifically from 1 parts by weight to 10 parts by weight, and more specifically from 1 parts by weight to 5 parts by weight with respect to 100 parts by weight of the polysiloxane copolymer, a binder resin.

The thermal polymerization initiator included in the first photosensitive resin composition may perform a role of generating active species capable of initiating polymerization of the polysiloxane copolymer, a binder resin, by heat. Such a thermal polymerization initiator may be one or more types selected from the group consisting of dicumyl peroxide, tert-butyl cumyl peroxide, di-(2-tert-butyl-peroxyisopropyl)-benzene, 2,5-dimethyl-2,5-di-(tert-butylperoxy)-hexane, di-tert-butyl peroxide and 2,5-dimethyl-2,5-di(tert-butylperoxy)hexyme-3.

The content of the thermal polymerization initiator may be from 1 parts by weight to 20 parts by weight, specifically from 1 parts by weight to 10 parts by weight, and more specifically from 1 parts by weight to 5 parts by weight with respect to 100 parts by weight of the polysiloxane copolymer, a binder resin.

The organic solvent (1) included in the first photosensitive resin composition may be one or more types of organic solvents selected from the group consisting of an acetate-based solvent, an ether-based solvent, a glycol-based solvent, a ketone-based solvent, an alcohol-based solvent and a carbonate-based solvent. Specifically, the organic solvent (1) may be one or more types selected from the group consisting of ethyl cellosolve, butyl cellosolve, ethyl carbitol, butyl carbitol, ethyl carbitol acetate, butyl carbitol acetate, ethylene glycol, cyclohexanone, cyclopentanone, 3-ethoxypronionic acid, N,N-dimethylacetamide, N-methylpyrrolidone and N-methylcaprolactam.

The content of such an organic solvent (1) may be from 1 parts by weight to 90 parts by weight, and specifically from 10 parts by weight to 80 parts by weight with respect to 100 parts by weight of the polysiloxane copolymer, a binder resin. When the content of the organic solvent (1) is within the above-mentioned range, the first photosensitive resin composition is readily coated leading to favorable thin film formation, and the thickness of the formed thin film may be readily adjusted.

The additive (1) included in the first photosensitive resin composition may be one or more types selected from the group consisting of a thermal stabilizer, a thermal crosslinking agent, a photocuring accelerator, a surfactant, an antioxidant, an adhesion aid, a light stabilizer and an antifoaming agent.

Among the additives (1), the adhesion aid may perform a role of enhancing adhesive strength of a thin film formed by the first photosensitive resin composition. Such an adhesion aid may be a silane coupling agent having a reactive functional group such as a carboxyl group, a methacryloyl group, a vinyl group, an isocyanate group, an epoxy group or a mercapto group. Specifically, the adhesion aid may be one or more types selected from the group consisting of trimethoxysilylbenzoic acid, γ-methacryloyloxypropyltrimethoxysilane, vinyltriacetoxysilane, vinyltrimethoxysilane, γ-isocyanatepropyltriethoxysilane, γ-glycidoxypropyltrimethoxysilane and β-(3, 4-epoxycyclohexyl)ethyltrimethoxysilane.

The content of such an adhesion aid may be from 0 parts by weight to 10 parts by weight, and specifically from 0.01 parts by weight to 10 parts by weight, from 0.02 to 1 parts by weight or from 0.05 parts by weight to 0.1 parts by weight with respect to 100 parts by weight of the polysiloxane copolymer, a binder resin. When the adhesion aid content is within the above-mentioned range, adhesive strength of the thin film may increase.

The surfactant may perform a role of enhancing coatability and uniformity of the first photosensitive resin composition, and enhancing stain removal of the formed thin film. Such a surfactant may be one or more types selected from the group consisting of a fluorine-based surfactant, a silicone-based surfactant and a nonion-based surfactant. Specifically, the surfactant may be polyether-modified polydimethylsiloxane.

The content of such a surfactant may be from 0.01 parts by weight to 5 parts by weight, and specifically from 0.02 parts by weight to 1 parts by weight or from 0.05 parts by weight to 0.1 parts by weight with respect to 100 parts by weight of the polysiloxane copolymer, a binder resin.

The photosensitizer (photo active compound) included in the second photosensitive resin composition may be obtained by substituting Ballast such as 9,9-bis(4-hydroxyphenyl)fluorene, bisphenol-A, 4,4'-[1-[4-[1-(4-hydroxyphenyl)-1-methylethyl]phenyl]-ethylidene]bisphenol, 2,3,4-trihydroxybenzophenone, 2,3,4-trihydroxyacetophenone, 2,3,4-trihydroxyphenyl hexyl ketone, 2,4,4'-trihydroxybenzophenone, 2,4,6-trihydroxybenzophenone, 2,3,4-trihydroxy-2'-methylbenzophenone, 2,2',4,4'-tetrahydroxybenzophenone, 2,3,4,4'-tetrahydroxybenzophenone, 4,4',4"-trihydroxyphenylmethane, 4,4',4"-ethylidenetris(2-methylphenol), bis(4-hydroxyphenyl)methylphenylmethane, 1,1,4-tris(4-hydroxyphenyl)cyclohexane, 2,2',3,4,4'-pentahydroxybenzophenone, 2,2',3,4,4',5-hexahydroxybenzophenone, 2,2',3,4,4'-pentahydroxydiphenylpropane or 2,2',3,4,4',5-pentahydroxydiphenylpropane with a naphthoquinone-1,2-diazide-4-sulfonic acid ester group or a naphthoquinone-1,2-diazide-5-sulfonic acid ester group.

The content of such a photosensitizer may be from 1 parts by weight to 80 parts by weight, and specifically from 10 parts by weight to 40 parts by weight with respect to 100 parts by weight of the polysiloxane copolymer, a binder resin. When the photosensitizer content is within the above-mentioned range, a pattern may be favorably formed while preventing phase separation.

The organic solvent (2) included in the second photosensitive resin composition may be one or more types of organic solvents selected from the group consisting of an acetate-based solvent, an ether-based solvent, a glycol-based solvent, a ketone-based solvent, an alcohol-based solvent and a carbonate-based solvent. Specifically, the organic solvent (2) may be one or more types selected from the group consisting of ethyl cellosolve, butyl cellosolve, ethyl carbitol, butyl carbitol, ethyl carbitol acetate, butyl carbitol acetate, ethylene glycol, cyclohexanone, cyclopentanone, N,N-dimethylacetamide, N-methylpyrrolidone and N-methylcaprolactam.

The content of such an organic solvent (2) may be from 1 parts by weight to 90 parts by weight, and specifically from 10 parts by weight to 80 parts by weight with respect to 100 parts by weight of the polysiloxane copolymer, a binder resin. When the content of the organic solvent (2) is within the above-mentioned range, the second photosensitive resin composition is readily coated leading to favorable thin film formation, and the thickness of the formed thin film may be readily adjusted.

The additive (2) included in the second photosensitive resin composition may be one or more types selected from the group consisting of a thermal stabilizer, a thermal crosslinking agent, a photocuring accelerator, a surfactant, an adhesion aid and a base quencher.

Among the additives (2), the adhesion aid may perform a role of enhancing adhesive strength of a thin film formed by the second photosensitive resin composition. Such an adhesion aid may be a silane coupling agent having a reactive functional group such as a carboxyl group, a methacryloyl group, a vinyl group, an isocyanate group, an epoxy group or a mercapto group. Specifically, the adhesion aid may be one or more types selected from the group consisting of trimethoxysilylbenzoic acid, γ-methacryloyloxypropyltrimethoxysilane, vinyltriacetoxysilane, vinyltrimethoxysilane, γ-isocyanatepropyltriethoxysilane, γ-glycidoxypropyltrimethoxysilane and β-(3,4-epoxycyclohexyl)ethyltrimethoxysilane.

The content of such an adhesion aid may be from 0.01 parts by weight to 10 parts by weight with respect to 100 parts by weight of the polysiloxane copolymer, a binder resin. When the adhesion aid content is within the above-mentioned range, adhesive strength of the thin film may increase.

The surfactant may perform a role of enhancing coatability and uniformity of the second photosensitive resin composition, and enhancing stain removal of the formed thin film. Such a surfactant may be one or more types selected from the group consisting of a fluorine-based surfactant, a silicone-based surfactant and a nonion-based surfactant.

The content of such a surfactant may be from 0.01 parts by weight to 10 parts by weight with respect to 100 parts by weight of the polysiloxane copolymer, a binder resin.

The photoacid generator included in the third photosensitive resin composition may perform a role of generating an acid by irradiating actinic rays or radiation rays. Such a photoacid generator may be a material capable of maintaining proper light absorption at a wavelength of 250 nm to 400 nm and transparency of an organic insulating film material in a visible region of 400 nm or greater. Specifically, the photoacid generator may be one or more types selected from the group consisting of a diazonium salt-based compound, a phosphonium salt-based compound, a sulfonium salt-based compound, an iodonium salt-based compound, an imide sulfonate-based compound, an oxime sulfonate-based compound, a diazodisulfone-based compound, a disulfone-based compound, an ortho-nitrobenzyl sulfonate-based compound and a triazine-based compound. More specifically, the photoacid generator may be a compound represented by the following Chemical Formula 10 or Chemical Formula 11.

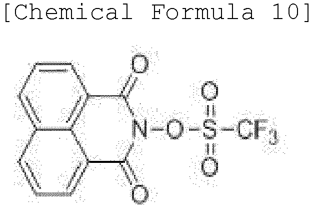

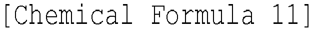

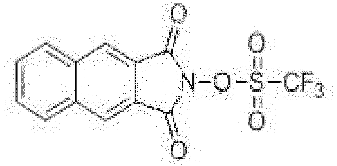

The content of such a photoacid generator may be from 0.1 parts by weight to 10 parts by weight, and specifically from 1 parts by weight to 5 parts by weight with respect to 100 parts by weight of the polysiloxane copolymer, a binder resin. When the content of the photoacid generator is within the above-mentioned range, acid generation may be efficient, and the third photosensitive resin composition may be prevented from its solubility decreasing.

The organic solvent (3) included in the third photosensitive resin composition may be one or more types selected from the group consisting of an acetate-based solvent, an ether-based solvent, a glycol-based solvent, a ketone-based solvent, an alcohol-based solvent and a carbonate-based solvent. Specifically, the organic solvent (3) may be one or more types selected from the group consisting of ethyl cellosolve, butyl cellosolve, ethyl carbitol, butyl carbitol, ethyl carbitol acetate, butyl carbitol acetate, ethylene glycol, cyclohexanone, cyclopentanone, N,N-dimethylacetamide, N-methylpyrrolidone and N-methylcaprolactam.

The content of such an organic solvent (3) may be from 1 parts by weight to 90 parts by weight, and specifically from 10 parts by weight to 80 parts by weight with respect to 100 parts by weight of the polysiloxane copolymer, a binder resin. When the content of the organic solvent (3) is within the above-mentioned range, the third photosensitive resin composition is readily coated leading to favorable thin film formation, and the thickness of the formed thin film may be readily adjusted.

The additive (3) included in the third photosensitive resin composition may be one or more types selected from the group consisting of a thermal stabilizer, a thermal crosslinking agent, a photocuring accelerator, a surfactant, an adhesion aid and a base quencher.

Among the additives (3), the adhesion aid may perform a role of enhancing adhesive strength of a thin film formed by the third photosensitive resin composition. Such an adhesion aid may be a silane coupling agent having a reactive functional group such as a carboxyl group, a methacryloyl group, a vinyl group, an isocyanate group, an epoxy group or a mercapto group. Specifically, the adhesion aid may be one or more types selected from the group consisting of trimethoxysilylbenzoic acid, γ-methacryloyloxypropyltrimethoxysilane, vinyltriacetoxysilane, vinyltrimethoxysilane, γ-isocyanatepropyltriethoxysilane, γ-glycidoxypropyltrimethoxysilane and β-(3,4-epoxycyclohexyl)ethyltrimethoxysilane.

The content of such an adhesion aid may be from 0.01 parts by weight to 10 parts by weight with respect to 100 parts by weight of the polysiloxane copolymer, a binder resin. When the adhesion aid content is within the above-mentioned range, adhesive strength of a thin film may increase.

The base quencher may perform a role of controlling acid migration from an exposed area to an unexposed area. Such a base quencher may be an amine formed with triethylamine, triethanolamine, aniline, ethylenediamine, pyridine, or tetraalkylammonium hydroxide and a salt thereof; proton sponge; 1,5-diazabicyclo[4.3.0]-5-nonene, 1,8-diazabicyclo[5,4,0]-7-undecene, diisopropylaniline, a cyclic alkylamine, a melamine derivative or polymer; glycoluril or a derivative thereof; or a polyether-containing amine.

The surfactant may perform a role of enhancing coatability and uniformity of the third photosensitive resin composition, and enhancing stain removal of the formed thin film. Such a surfactant may be one or more types selected from the group consisting of a fluorine-based surfactant, a silicone-based surfactant and a nonion-based surfactant.

The content of such a surfactant may be from 0.01 parts by weight to 10 parts by weight with respect to 100 parts by weight of the polysiloxane copolymer, a binder resin.

The thermal acid generator (TAG) included in the fourth photosensitive resin composition may perform a role of generating an acid capable of increasing crosslinking binding strength. Such a thermal acid generator may be activated at 90°C or higher, specifically 120°C or higher, and more specifically 150°C or higher. The thermal acid generator may be metal-free sulfonium salt and iodonium salt (for example, triarylsulfonium, dialkylarylsulfonium, diarylalkylsulfonium salt of non-nucleophilic strong acid, alkylaryliodonium, diaryliodonium salt of non-nucleophilic strong acid, ammonium, alkylammonium, dialkylammonium, trialkylammonium, tetraalkylammonium salt of non-nucleophilic strong acid and the like). In addition, a covalent thermal acid generator may be a useful additive, for example, a 2-nitrobenzyl ester of alkyl or arylsulfonic acid thermally decomposed to form free sulfonic acid, and another ester of sulfonic acid. Specifically, the covalent thermal acid generator may be diaryliodonium perfluoroalkylsulfonate, diaryliodonium tris(fluoroalkylsulfonyl)methide, diaryliodonium bis(fluoroalkylsulfonyl)methide, diaryliodonium bis(fluoroalkylsulfonyl)imide, diaryliodonium quaternary ammonium perfluoroalkylsulfonate or the like. The reactive ester may specifically be 2-nitrobenzyl tosylate, 2,4-dinitrobenzyl tosylate, 2,6-dinitrobenzyl tosylate, 4-nitrobenzyl tosylate; a benzenesulfonate, for example, 2-trifluoromethyl-6-nitrobenzyl 4-chlorobenzenesulfonate, 2-trifluoromethyl-6-nitrobenzyl 4-nitro benzenesulfonate; a phenol-based sulfonate ester, for example, phenyl 4-methoxybenzenesulfonate; quaternary ammonium tris(fluoroalkylsulfonyl)methide, quaternary alkyl ammonium bis(fluoroalkylsulfonyl)imide, an alkyl ammonium salt of an organic acid, for example, a triethylammonium salt of 10-camphorsulfonic acid, or the like.

The crosslinking binding agent included in the fourth photosensitive resin composition may, as an electrophile, perform a role of forming a carbonium ion (carbocation) either alone or under the presence of an acid. By such a crosslinking binding agent, a compound containing a group such as an alcohol, an ether, an ester, an olefin, methoxymethylamino, methoxymethylphenyl and other molecules containing a plurality of electrophilic positions may bind to a binder resin through crosslinking. The crosslinking binding agent may be 1,3-adamantanediol, 1,3,5-adamantanetriol, a multifunctional reactive benzyl compound, methylol, for example, tetramethoxymethyl-bisphenol (TMOM-BP), an aminoplast crosslinking binding agent, glycoluril, cymel, powderlink or the like. In addition, as a crosslinking binding agent, polymers of glycoluril and polyol may be used.

The organic solvent (4) included in the fourth photosensitive resin composition may be one or more types selected from the group consisting of an acetate-based solvent, an ether-based solvent, a glycol-based solvent, a ketone-based solvent, an alcohol-based solvent and a carbonate-based solvent. Specifically, the organic solvent (4) may be one or more types selected from the group consisting of ethyl cellosolve, butyl cellosolve, ethyl carbitol, butyl carbitol, ethyl carbitol acetate, butyl carbitol acetate, ethylene glycol, cyclohexanone, cyclopentanone, N,N-dimethylacetamide, N-methylpyrrolidone and N-methylcaprolactam.

The content of such an organic solvent (4) may be from 1 parts by weight to 90 parts by weight, and specifically from 10 parts by weight to 80 parts by weight with respect to 100 parts by weight of the polysiloxane copolymer, a binder resin. When the organic solvent (4) content is within the above-mentioned range, the fourth photosensitive resin composition is readily coated leading to favorable thin film formation, and the thickness of the formed thin film may be readily adjusted.

The additive (4) included in the fourth photosensitive resin composition may be one or more types selected from the group consisting of a thermal stabilizer, a thermal crosslinking agent, a photocuring accelerator, a surfactant, an adhesion aid and a base quencher.

Among the additives (4), the adhesion aid may perform a role of enhancing adhesive strength of a thin film formed by the fourth photosensitive resin composition. Such an adhesion aid may be a silane coupling agent having a reactive functional group such as a carboxyl group, a methacryloyl group, a vinyl group, an isocyanate group, an epoxy group or a mercapto group. Specifically, the adhesion aid may be one or more types selected from the group consisting of trimethoxysilylbenzoic acid, γ-methacryloyloxypropyltrimethoxysilane, vinyltriacetoxysilane, vinyltrimethoxysilane, γ-isocyanatepropyltriethoxysilane, γ-glycidoxypropyltrimethoxysilane and β-(3,4-epoxycyclohexyl)ethyltrimethoxysilane.

The content of such an adhesion aid may be from 0.01 parts by weight to 10 parts by weight with respect to 100 parts by weight of the polysiloxane copolymer, a binder resin. When the adhesion aid content is within the above-mentioned range, adhesive strength of the thin film may increase.

The base quencher may perform a role of controlling acid migration from an exposed area to an unexposed area. Such a base quencher may be an amine formed with triethylamine, triethanolamine, aniline, ethylenediamine, pyridine, or tetraalkylammonium hydroxide and a salt thereof; proton sponge; 1,5-diazabicyclo[4.3.0]-5-nonene, 1,8-diazabicyclo[5,4,0]-7-undecene, diisopropylaniline, a cyclic alkylamine, a melamine derivative or polymer; glycoluril or a derivative thereof; or a polyether-containing amine.

The surfactant may perform a role of enhancing coatability and uniformity of the fourth photosensitive resin composition, and enhancing stain removal of the formed thin film. Such a surfactant may be one or more types selected from the group consisting of a fluorine-based surfactant, a silicone-based surfactant and a nonion-based surfactant.

The content of the surfactant may be from 0.01 parts by weight to 10 parts by weight with respect to 100 parts by weight of the polysiloxane copolymer, a binder resin.

Such a photosensitive resin composition according to one embodiment of the present invention is useful in a process of forming a photosensitive curing pattern or a hard mask when manufacturing a semiconductor device (for example, planarization of low dielectric (Low-k) interlayer (inter level dielectric layer) and pre-metal dielectric (PMD) layer, overcoat passivation, gap filling), a device for an LCD, a device for an OLED (for example, partition wall material (pixel define layer), half-tone resist), a device for a solar cell, a device for a flexible display, a device for manufacturing a touch screen or a device for a nanoimprint lithography.

A method for coating the photosensitive resin composition for forming the photosensitivity curing pattern may be a commonly known method. Specifically, the coating method may be spin coating, dip coating, roll coating, screen coating, spray coating, flow coating, screen printing, ink jet, drop casting or the like.

The thickness of the thin film formed using the coating method may be adjusted depending on the coating method, the solid concentration of the composition, the viscosity and the like, and may be specifically in a range of 0.5 µm to 100 µm. After forming such a thin film, the solvent may be volatilized by applying vacuum, infrared rays or heat in a pre-bake process, and then a selective exposure process may be conducted. In the exposure process, excimer laser, far ultraviolet rays, ultraviolet rays, visible rays, electron beam, X-rays, g-rays (wavelength 436 nm), i-rays (wavelength 365 nm), h-rays (wavelength 405 nm) or the like may be used, and an exposure method such as a contact type, a proximity type or a projection type may be used.

For the development of the thin film formed using such a photosensitive resin composition according to one embodiment of the present invention, an environmental-friendly and economical aqueous alkali solution may be used as a developing solution. The alkali developing solution may specifically be an aqueous solution of quaternary ammonium hydroxide such as tetramethylammonium hydroxide or tetraethylammonium hydroxide; an amine-based aqueous solution such as ammonia, ethylamine, diethylamine or triethylamine. More specifically, the alkali developing solution may be an aqueous tetramethylammonium hydroxide (TMAH) solution.

Hereinafter, the present invention will be described in more detail with reference to examples. However, the following examples are for illustrative purposes only, and it will be obvious to those skilled in the art that various changes and modifications may be made within the category and technological ideas of the present invention, and the scope of the present invention is not limited thereto.

### [Synthesis Example 1] Synthesis of Tetravalent Ethoxysilane Amic Acid Monomer (APDEMS/CHDA)

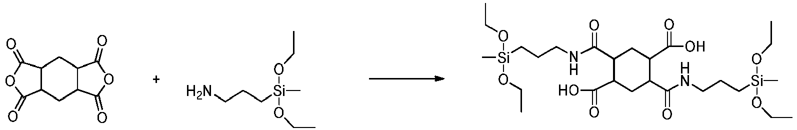

To a 250 mL flask holding anhydrous tetrahydrofuran (THF) (80 mL), 3-aminopropyldiethoxymonomethylsilane (APDEMS) (38.3 g) and cyclohexyl dianhydride (CHDA) (22.4 g) were introduced under the nitrogen atmosphere, and the result was stirred and reacted for 24 hours at room temperature. After vacuum concentrating the reaction solution, off-white solid (58.2 g) was obtained in a 96% yield without further purification.

¹H-NMR (δ, ppm), CDCl₃: 3.83 (q, 8H), 2.98 (m, 4H), 2.55 (m, 2H), 2.41 (m, 2H), 2.04 (m, 2H), 1.78 (m, 2H), 1.40 (m, 4H), 1.11 (t, 12H), 0.46 (m, 4H), 0.14 (s, 6H).

### [Synthesis Example 2] Synthesis of Tetravalent Ethoxysilane Amic Acid Monomer (APDEMS/PMDA)

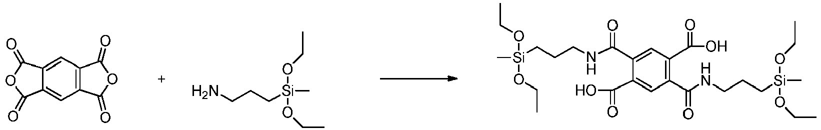

To a 250 mL flask holding anhydrous tetrahydrofuran (THF) (80 mL), 3-aminopropyldiethoxymonomethylsilane (APDEMS) (38.3 g) and pyromellitic dianhydride (PMDA) (21.8 g) were introduced under the nitrogen atmosphere, and the result was stirred and reacted for 48 hours at room temperature. After vacuum concentrating the reaction solution, light yellow solid (58.9 g) was obtained in a 98% yield without further purification.

¹H-NMR (δ, ppm), CDCl₃: 8.42 (s, 2H), 3.79 (q, 8H), 3.28 (m, 4H), 1.43 (m, 4H), 1.08 (t, 12H), 0.48 (m, 4H), 0.15 (s, 6H) .

### [Synthesis Example 3] Synthesis of Divalent Ethoxysilane Amic Acid Monomer (APDEMS/MA)

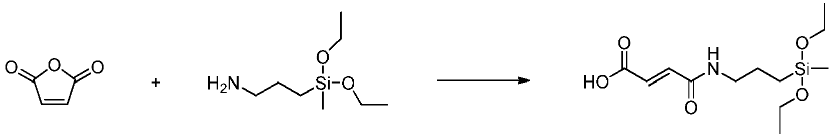

To a 100 mL flask holding anhydrous tetrahydrofuran (THF) (40 mL), 3-aminopropyldiethoxymonomethylsilane (APDEMS) (9.6 g) and maleic anhydride (MA) (4.9 g) were introduced under the nitrogen atmosphere, and the result was stirred and reacted for 24 hours at room temperature. After vacuum concentrating the reaction solution, light yellow solid (14.3 g) was obtained in a 99% yield without further purification.

¹H-NMR (δ, ppm), CDCl₃: 7.3 (d, 1H), 6.7 (d, 1H), 3.75 (q, 4H), 3.09 (m, 2H), 1.37 (m, 2H), 1.13 (t, 6H), 0.45 (m, 2H), 0.11 (s, 3H).

### [Synthesis Example 4] Synthesis of Tetravalent Methoxysilane Amic Acid Monomer (APDMMS/CHDA)

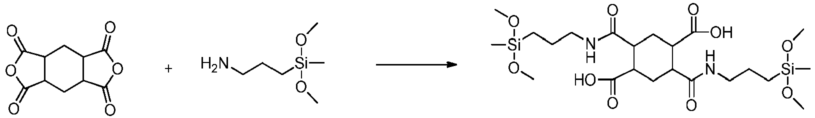

To a 250 mL flask holding anhydrous tetrahydrofuran (THF) (80 mL), 3-aminopropyldimethoxymonomethylsilane (APDMMS) (32.7 g) and cyclohexyl dianhydride (CHDA) (22.4 g) were introduced under the nitrogen atmosphere, and the result was stirred and reacted for 24 hours at room temperature. After vacuum concentrating the reaction solution, off-white solid (53.1 g) was obtained in a 97% yield without further purification.

¹H-NMR (δ, ppm), CDCl₃: 3.39 (s, 12H), 2.96 (m, 4H), 2.54 (m, 2H), 2.44 (m, 2H), 2.02 (m, 2H), 1.75 (m, 2H), 1.38 (m, 4H), 0.42 (m, 4H), 0.13 (s, 6H).

### [Synthesis Example 5] Synthesis of Tetravalent Methoxysilane Amic Acid Monomer (APDMMS/PMDA)

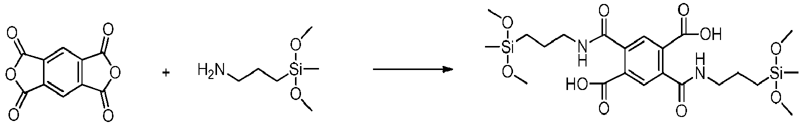

To a 250 mL flask holding anhydrous tetrahydrofuran (THF) (80 mL), 3-aminopropyldimethoxymonomethylsilane (APDMMS) (32.7 g) and pyromellitic dianhydride (PMDA) (21.8 g) were introduced under the nitrogen atmosphere, and the result was stirred and reacted for 48 hours at room temperature. After vacuum concentrating the reaction solution, light yellow solid (53.7 g) was obtained in a 99% yield without further purification.

¹H-NMR (δ, ppm), CDCl₃: 8.39 (s, 2H), 3.37 (s, 12H), 3.29 (m, 4H), 1.45 (m, 4H), 0.43 (m, 4H), 0.12 (s, 6H).

### [Synthesis Example 6] Synthesis of Divalent Methoxysilane Amic Acid Monomer (APDMMS/MA)

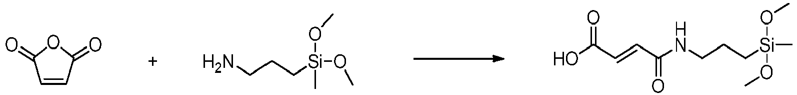

To a 100 mL flask holding anhydrous tetrahydrofuran (THF) (40 mL), 3-aminopropyldimethoxymonomethylsilane (APDMMS) (8.2 g) and maleic anhydride (MA) (4.9 g) were introduced under the nitrogen atmosphere, and the result was stirred and reacted for 24 hours at room temperature. After vacuum concentrating the reaction solution, light yellow solid (12.4 g) was obtained in a 94% yield without further purification.

¹H-NMR (δ, ppm), CDCl₃: 6.4 (d, 1H), 6.3 (d, 1H), 3.40 (s, 6H), 3.07 (m, 2H), 1.34 (m, 2H), 0.39 (m, 2H), 0.13 (s, 3H) .

### [Examples 1 to 6]

To a 250 mL three-neck flask holding propylene glycol monomethyl ether acetate (PGMEA) (60 mL), phenyltrimethoxysilane (PTMS) (23.4 g), methyltrimethoxysilane (MTMS) (34.3 g) and tetraethoxysilane (TEOS) (25.0 g) were introduced under the nitrogen atmosphere, and the result was mixed. After stirring the mixture solution for 10 minutes, an aqueous hydrochloric acid solution (30 g) dissolved in deionized water in 0.1% was slowly added dropwise thereto over 1 hour approximately at a reaction temperature of 40°C or lower for the reaction. After that, reaction mixture was stirred for 10 minutes, and after raising the temperature to 80°C, the result was stirred for 2 hours to prepare a siloxane-based polymer. Next, the tetravalent ethoxysilane amic acid monomer (APDEMS/CHDA) (5.0 g) synthesized in Synthesis Example 1 was slowly added thereto, and the result was further stirred and reacted for 1 hour. The reaction mixture was cooled to room temperature, and after separating the layers by adding ethyl acetate and deionized water thereto, the organic layer was washed twice with deionized water and then firstly concentrated in vacuo. Propylene glycol monomethyl ether acetate (PGMEA) was introduced to the reaction solution so that the firstly vacuum concentrated reaction solution has a solid content of approximately 30%, and the result was secondly concentrated in vacuo to obtain a product (polysiloxane copolymer).

Next, each product (polysiloxane copolymer) was obtained in the same manner except that the last reaction time of PTMS/MTMS/TEOS was adjusted, and results of measuring weight average molecular weight (Mw) and ADR (2.38% tetramethylammonium hydroxide (TMAH) developing solution) for each of the obtained products are shown in the following Table 1.

**[Table 1]**

| Category | PTMS | MTMS | TEOS | Reaction Time | APDMES/CHDA | Mw | ADR (Å) |
|---|---|---|---|---|---|---|---|
| Example 1 | 23.4 g | 34.3 g | 25.0 g | 2 Hours | 5.0 g | 6, 231 | 1,500 |
| Example 2 | 23.4 g | 34.3 g | 25.0 g | 4 Hours | 5.0 g | 8,324 | 1,050 |
| Example 3 | 23.4 g | 34.3 g | 25.0 g | 6 Hours | 5.0 g | 9,566 | 550 |
| Example 4 | 23.4 g | 34.3 g | 25.0 g | 8 Hours | 5.0 g | 10,29 3 | < 200 |
| Example 5 | 23.4 g | 34.3 g | 25.0 g | 10 Hours | 5.0 g | 10,78 0 | - |
| Example 6 | 23.4 g | 34.3 g | 25.0 g | 12 Hours | 5.0 g | 11,20 1 | - |

### [Examples 7 to 12]

To a 250 mL three-neck flask holding propylene glycol monomethyl ether acetate (PGMEA) (60 mL), phenyltrimethoxysilane (PTMS) (23.4 g), methyltrimethoxysilane (MTMS) (34.3 g) and tetraethoxysilane (TEOS) (25.0 g) were introduced under the nitrogen atmosphere, and the result was mixed. After stirring the mixture solution for 10 minutes, an aqueous hydrochloric acid solution (30 g) dissolved in deionized water in 0.1% was slowly added dropwise thereto over 1 hour approximately at a reaction temperature of 40°C or lower for reaction. The reaction solution was stirred for 10 minutes, and after raising the temperature to 80°C, the result was stirred for 2 hours to prepare a siloxane-based polymer. Next, the tetravalent ethoxysilane amic acid monomer (APDEMS/PMDA) (4.9 g) synthesized in Synthesis Example 2 was slowly dropped thereto, and the result was further stirred and reacted for 1 hour. The reaction solution was cooled to room temperature, and after separating the layers by adding ethyl acetate and deionized water thereto, the organic layer was washed twice with deionized water and then firstly vacuum concentrated. Propylene glycol monomethyl ether acetate (PGMEA) was introduced to the reaction solution so that the firstly vacuum concentrated reaction solution has a solid content of approximately 30%, and the result was secondly vacuum concentrated to obtain a product (polysiloxane copolymer).

Next, each product (polysiloxane copolymer) was obtained in the same manner except that the last reaction time of PTMS/MTMS/TEOS was adjusted, and results of measuring weight average molecular weight (Mw) and ADR (2.38% tetramethylammonium hydroxide (TMAH) developing solution) for each of the obtained products are shown in the following Table 2.

**[Table 2]**

| Category | PTMS | MTMS | TEOS | Reaction Time | APDMES/PMDA | Mw | ADR (Å) |
|---|---|---|---|---|---|---|---|
| Example 7 | 23.4 g | 34.3 g | 25.0 g | 2 Hours | 4.9 g | 5,694 | 640 |
| Example 8 | 23.4 g | 34.3 g | 25.0 g | 4 Hours | 4.9 g | 7,856 | < 200 |
| Example 9 | 23.4 g | 34.3 g | 25.0 g | 6 Hours | 4.9 g | 8,562 | - |
| Example 10 | 23.4 g | 34.3 g | 25.0 g | 8 Hours | 4.9 g | 9,049 | - |
| Example 11 | 23.4 g | 34.3 g | 25.0 g | 10 Hours | 4.9 g | 9,283 | - |
| Example 12 | 23.4 g | 34.3 g | 25.0 g | 12 Hours | 4.9 g | 9,618 | - |

### [Examples 13 to 18]

To a 250 mL three-neck flask holding propylene glycol monomethyl ether acetate (PGMEA) (60 mL), phenyltrimethoxysilane (PTMS) (23.4 g), methyltrimethoxysilane (MTMS) (34.3 g) and tetraethoxysilane (TEOS) (25.0 g) were introduced under the nitrogen atmosphere, and the result was mixed. After stirring the mixture solution for 10 minutes, an aqueous hydrochloric acid solution (30 g) dissolved in deionized water in 0.1% was slowly added dropwise thereto over 1 hour approximately at a reaction temperature of 40°C or lower for reaction. The reaction solution was stirred for 10 minutes, and after raising the temperature to 80°C, the result was stirred for 2 hours to prepare a siloxane-based polymer. Next, the divalent ethoxysilane amic acid monomer (APDEMS/MA) (3.5 g) synthesized in Synthesis Example 3 was slowly dropped thereto, and the result was further stirred and reacted for 1 hour. After that, the reaction solution was cooled to room temperature, and after separating the layers by adding ethyl acetate and deionized water thereto, the organic layer was washed twice with deionized water and then firstly vacuum concentrated. Propylene glycol monomethyl ether acetate (PGMEA) was introduced to the reaction solution so that the firstly vacuum concentrated reaction solution has a solid content of approximately 30%, and the result was secondly vacuum concentrated to obtain a product (polysiloxane copolymer).

Next, each product (polysiloxane copolymer) was obtained in the same manner except that the last reaction time of PTMS/MTMS/TEOS was adjusted, and results of measuring weight average molecular weight (Mw) and ADR (2.38% tetramethylammonium hydroxide (TMAH) developing solution) for each of the obtained products are shown in the following Table 3.

**[Table 3]**

| Category | PTMS | MTMS | TEOS | Reaction Time | APDMES/MA | Mw | ADR (Å) |
|---|---|---|---|---|---|---|---|
| Example 13 | 23.4 g | 34.3 g | 25.0 g | 2 Hours | 3.5 g | 3,924 | 1,800 |
| Example 14 | 23.4 g | 34.3 g | 25.0 g | 4 Hours | 3.5 g | 4,891 | 1,100 |
| Example 15 | 23.4 g | 34.3 g | 25.0 g | 6 Hours | 3.5 g | 6,053 | 450 |
| Example 16 | 23.4 g | 34.3 g | 25.0 g | 8 Hours | 3.5 g | 6,829 | - |
| Example 17 | 23.4 g | 34.3 g | 25.0 g | 10 Hours | 3.5 g | 7,510 | - |
| Example 18 | 23.4 g | 34.3 g | 25.0 g | 12 Hours | 3.5 g | 7,936 | - |

### [Examples 19 to 24]

To a 250 mL three-neck flask holding propylene glycol monomethyl ether acetate (PGMEA) (60 mL), phenyltrimethoxysilane (PTMS) (23.4 g), methyltrimethoxysilane (MTMS) (34.3 g) and tetraethoxysilane (TEOS) (25.0 g) were introduced under the nitrogen atmosphere, and the result was mixed. After stirring the mixture solution for 10 minutes, an aqueous hydrochloric acid solution (30 g) dissolved in deionized water in 0.1% was slowly added dropwise thereto over 1 hour approximately at a reaction temperature of 40°C or lower for reaction. After that, the reaction solution was stirred for 10 minutes, and after raising the temperature to 80°C, the result was stirred for 2 hours to prepare a siloxane-based polymer. Next, the tetravalent methoxysilane amic acid monomer (APDMMS/CHDA) (4.5 g) synthesized in Synthesis Example 4 was slowly dropped thereto, and the result was further stirred and reacted for 1 hour. After that, the reaction solution was cooled to room temperature, and after separating the layers by adding ethyl acetate and deionized water thereto, the organic layer was washed twice with deionized water and then firstly vacuum concentrated. Propylene glycol monomethyl ether acetate (PGMEA) was introduced to the reaction solution so that the firstly vacuum concentrated reaction solution has a solid content of approximately 30%, and the result was secondly vacuum concentrated to obtain a product (polysiloxane copolymer).

Next, each product (polysiloxane copolymer) was obtained in the same manner except that the last reaction time of PTMS/MTMS/TEOS was adjusted, and results of measuring weight average molecular weight (Mw) and ADR (2.38% tetramethylammonium hydroxide (TMAH) developing solution) for each of the obtained products are shown in the following Table 4.

**[Table 4]**

| Category | PTMS | MTMS | TEOS | Reaction Time | APDMMS/CHDA | Mw | ADR (Å) |
|---|---|---|---|---|---|---|---|
| Example 19 | 23.4 g | 34.3 g | 25.0 g | 2 Hours | 4.5 g | 5,955 | 1,900 |
| Example 20 | 23.4 g | 34.3 g | 25.0 g | 4 Hours | 4.5 g | 6,859 | 1,200 |
| Example 21 | 23.4 g | 34.3 g | 25.0 g | 6 Hours | 4.5 g | 7,251 | 830 |
| Example 22 | 23.4 g | 34.3 g | 25.0 g | 8 Hours | 4.5 g | 7,502 | 540 |
| Example 23 | 23.4 g | 34.3 g | 25.0 g | 10 Hours | 4.5 g | 7,682 | ~ 200 |
| Example 24 | 23.4 g | 34.3 g | 25.0 g | 12 Hours | 4.5 g | 7,729 | < 100 |

### [Examples 25 to 30]

To a 250 mL three-neck flask holding propylene glycol monomethyl ether acetate (PGMEA) (60 mL), phenyltrimethoxysilane (PTMS) (23.4 g), methyltrimethoxysilane (MTMS) (34.3 g) and tetraethoxysilane (TEOS) (25.0 g) were introduced under the nitrogen atmosphere, and the result was mixed. After stirring the mixture solution for 10 minutes, an aqueous hydrochloric acid solution (30 g) dissolved in deionized water in 0.1% was slowly added dropwise thereto over 1 hour approximately at a reaction temperature of 40°C or lower for reaction. After that, the reaction solution was stirred for 10 minutes, and after raising the temperature to 80°C, the result was stirred for 2 hours to prepare a siloxane-based polymer. Next, the tetravalent methoxysilane amic acid monomer (APDMMS/PMDA) (4.4 g) synthesized in Synthesis Example 5 was slowly dropped thereto, and the result was further stirred and reacted for 1 hour. After that, the reaction solution was cooled to room temperature, and after separating the layers by adding ethyl acetate and deionized water thereto, the organic layer was washed twice with deionized water and then firstly vacuum concentrated. Propylene glycol monomethyl ether acetate (PGMEA) was introduced to the reaction solution so that the firstly vacuum concentrated reaction solution has a solid content of approximately 30%, and the result was secondly vacuum concentrated to obtain a product (polysiloxane copolymer).

Next, each product (polysiloxane copolymer) was obtained in the same manner except that the last reaction time of PTMS/MTMS/TEOS was adjusted, and results of measuring weight average molecular weight (Mw) and ADR (2.38% tetramethylammonium hydroxide (TMAH) developing solution) for each of the obtained products are shown in the following Table 5.

**[Table 5]**

| Category | PTMS | MTMS | TEOS | Reaction Time | APDMMS/PMDA | Mw | ADR (Å) |
|---|---|---|---|---|---|---|---|
| Example 25 | 23.4 g | 34.3 g | 25.0 g | 2 Hours | 4.4 g | 4,826 | 1,520 |
| Example 26 | 23.4 g | 34.3 g | 25.0 g | 4 Hours | 4.4 g | 5,621 | 1,080 |
| Example 27 | 23.4 g | 34.3 g | 25.0 g | 6 Hours | 4.4 g | 6,583 | 620 |
| Example 28 | 23.4 g | 34.3 g | 25.0 g | 8 Hours | 4.4 g | 7,059 | 340 |
| Example 29 | 23.4 g | 34.3 g | 25.0 g | 10 Hours | 4.4 g | 7,250 | - |
| Example 30 | 23.4 g | 34.3 g | 25.0 g | 12 Hours | 4.4 g | 7,311 | - |

### [Examples 31 to 36]

To a 250 mL three-neck flask holding propylene glycol monomethyl ether acetate (PGMEA) (60 mL), phenyltrimethoxysilane (PTMS) (23.4 g), methyltrimethoxysilane (MTMS) (34.3 g) and tetraethoxysilane (TEOS) (25.0 g) were introduced under the nitrogen atmosphere, and the result was mixed. After stirring the mixture solution for 10 minutes, an aqueous hydrochloric acid solution (30 g) dissolved in deionized water in 0.1% was slowly added dropwise thereto over 1 hour approximately at a reaction temperature of 40°C or lower for reaction. After that, the reaction solution was stirred for 10 minutes, and after raising the temperature to 80°C, the result was stirred for 2 hours to prepare a siloxane-based polymer. Next, the divalent methoxysilane amic acid monomer (APDMMS/MA) (3.2 g) synthesized in Synthesis Example 6 was slowly dropped thereto, and the result was further stirred and reacted for 1 hour. After that, the reaction solution was cooled to room temperature, and after separating the layers by adding ethyl acetate and deionized water thereto, the organic layer was washed twice with deionized water and then firstly vacuum concentrated. Propylene glycol monomethyl ether acetate (PGMEA) was introduced to the reaction solution so that the firstly vacuum concentrated reaction solution has a solid content of approximately 30%, and the result was secondly vacuum concentrated to obtain a product (polysiloxane copolymer).

Next, each product (polysiloxane copolymer) was obtained in the same manner except that the last reaction time of PTMS/MTMS/TEOS was adjusted, and results of measuring weight average molecular weight (Mw) and ADR (2.38% tetramethylammonium hydroxide (TMAH) developing solution) for each of the obtained products are shown in the following Table 6.

**[Table 6]**

| Category | PTMS | MTMS | TEOS | Reaction Time | APDMMS/MA | Mw | ADR (Å) |
|---|---|---|---|---|---|---|---|
| Example 31 | 23.4 g | 34.3 g | 25.0 g | 2 Hours | 3.2 g | 3,586 | 2,000 |
| Example 32 | 23.4 g | 34.3 g | 25.0 g | 4 Hours | 3.2 g | 4,351 | 1,620 |
| Example 33 | 23.4 g | 34.3 g | 25.0 g | 6 Hours | 3.2 g | 5,020 | 920 |
| Example 34 | 23.4 g | 34.3 g | 25.0 g | 8 Hours | 3.2 g | 5,689 | 670 |
| Example 35 | 23.4 g | 34.3 g | 25.0 g | 10 Hours | 3.2 g | 5,906 | 390 |
| Example 36 | 23.4 g | 34.3 g | 25.0 g | 12 Hours | 3.2 g | 6,059 | < 100 |

### [Example 37]

The polysiloxane copolymer (100 g) prepared in Example 1, pyridinium p-toluenesulfonate (0.01 g) and 3,4-dihydro-2H-pyran (1.6 g) were introduced to a reactor, and a reaction of acetal introduction was conducted for 24 hours at room temperature to obtain a product (polysiloxane copolymer). The obtained product had a weight average molecular weight (Mw) of 6,379, and a result of measuring ADR (2.38% tetramethylammonium hydroxide (TMAH) developing solution) was 50 Å, and it was identified that acetal was successfully introduced.

### [Example 38]

To a 250 mL three-neck flask holding propylene glycol monomethyl ether acetate (PGMEA) (60 mL), phenyltrimethoxysilane (PTMS) (23.4 g), methyltrimethoxysilane (MTMS) (34.3 g), vinyltriethoxysilane (11.8 g) and tetraethoxysilane (TEOS) (12.5 g) were introduced under the nitrogen atmosphere, and the result was mixed. After stirring the mixture solution for 10 minutes, an aqueous hydrochloric acid solution (30 g) dissolved in deionized water in 0.1% was slowly added dropwise thereto over 1 hour approximately at a reaction temperature of 40°C or lower for reaction. After that, the reaction solution was stirred for 10 minutes, and after raising the temperature to 80°C, the result was stirred for 2 hours to prepare a siloxane-based polymer. Next, the tetravalent ethoxysilane amic acid monomer (APDEMS/CHDA) (5.0 g) synthesized in Synthesis Example 1 was slowly dropped thereto, and the result was further stirred and reacted for 1 hour. After that, the reaction solution was cooled to room temperature, and after separating the layers by adding ethyl acetate and deionized water thereto, the organic layer was washed twice with deionized water and then firstly vacuum concentrated. Propylene glycol monomethyl ether acetate (PGMEA) was introduced to the reaction solution so that the firstly vacuum concentrated reaction solution has a solid content of approximately 30%, and the result was secondly vacuum concentrated to obtain a product (polysiloxane copolymer). The obtained product had a weight average molecular weight (Mw) of 5,483, and a result of measuring ADR (2.38% tetramethylammonium hydroxide (TMAH) developing solution) was 1,800 Å.

### [Examples 39 to 44]

To a 250 mL three-neck flask holding propylene glycol monomethyl ether acetate (PGMEA) (60 mL), phenyltrimethoxysilane (PTMS) (23.4 g), methyltrimethoxysilane (MTMS) (34.3 g) and tetraethoxysilane (TEOS) (25.0 g) were introduced under the nitrogen atmosphere, and the result was mixed. After stirring the mixture solution for 10 minutes, an aqueous hydrochloric acid solution (30 g) dissolved in deionized water in 0.1% was slowly added dropwise thereto over 1 hour approximately at a reaction temperature of 40°C or lower, and then a mixture solution of 3-methacryloxypropyltrimethoxysilane (MPMS) (42.38 g) and 3-glycidoxypropyltrimethoxysilane (GPMS) (9.85 g) was introduced thereto. The result was stirred for 10 minutes, and, after raising the temperature to 80°C, stirred for 2 hours to prepare a siloxane-based polymer. Next, the divalent methoxysilane amic acid monomer (APDMMS/MA) (3.2 g) synthesized in Synthesis Example 6 was slowly dropped thereto, and the result was further stirred and reacted for 1 hour. After that, the reaction solution was cooled to room temperature, and after separating the layers by adding ethyl acetate and deionized water thereto, the organic layer was washed twice with deionized water and then firstly vacuum concentrated. Propylene glycol monomethyl ether acetate (PGMEA) was introduced to the reaction solution so that the firstly vacuum concentrated reaction solution has a solid content of approximately 30%, and the result was secondly vacuum concentrated to obtain a product (polysiloxane copolymer).

Next, each product (polysiloxane copolymer) was obtained in the same manner except that the last reaction time of PTMS/MTMS/TEOS/MPMS/GPMS was adjusted, and results of measuring weight average molecular weight (Mw) and ADR (2.38% tetramethylammonium hydroxide (TMAH) developing solution) for each of the obtained products are shown in the following Table 7.

**[Table 7]**

| Category | PTMS | MTMS | TEOS | MPMS | GPMS | Reaction Time | APDMMS/ MA | Mw | ADR (Å) |
|---|---|---|---|---|---|---|---|---|---|
| Example 39 | 23.4 g | 34.3 g | 25.0 g | 42.38 g | 9.85 g | 2 Hours | 3.2g | 1322 | 3805 |
| Example 40 | 23.4 g | 34.3 g | 25.0 g | 42.38 g | 9.85 g | 4 Hours | 3.2g | 1853 | 3002 |
| Example 41 | 23.4 g | 34.3 g | 25.0 g | 42.38 g | 9.85 g | 6 Hours | 3.2g | 2223 | 2325 |
| Example 42 | 23.4 g | 34.3 g | 25.0 g | 42.38 g | 9.85 g | 8 Hours | 3.2g | 2658 | 1800 |
| Example 43 | 23.4 g | 34.3 g | 25.0 g | 42.38 g | 9.85 g | 10 Hours | 3.2g | 3102 | 1200 |
| Example 44 | 23.4 g | 34.3 g | 25.0 g | 42.38 g | 9.85 g | 12 Hours | 3.2g | 3503 | 573 |

### [Examples 45 to 50]

To a 250 mL three-neck flask holding propylene glycol monomethyl ether acetate (PGMEA) (60 mL), phenyltrimethoxysilane (PTMS) (23.4 g), methyltrimethoxysilane (MTMS) (34.3 g), tetraethoxysilane (TEOS) (25.0 g) and dimethyldimethoxysilane (DMDS) (6.54 g) were introduced under the nitrogen atmosphere, and the result was mixed. After stirring the mixture solution for 10 minutes, an aqueous hydrochloric acid solution (30 g) dissolved in deionized water in 0.1% was slowly added dropwise thereto over 1 hour approximately at a reaction temperature of 40°C or lower for reaction. After that, the reaction solution was stirred for 10 minutes, and after raising the temperature to 80°C, the result was stirred for 2 hours to prepare a siloxane-based polymer. Next, the divalent methoxysilane amic acid monomer (APDMMS/MA) (3.2 g) synthesized in Synthesis Example 6 was slowly dropped thereto, and the result was further stirred and reacted for 1 hour. After that, the reaction solution was cooled to room temperature, and after separating the layers by adding ethyl acetate and deionized water thereto, the organic layer was washed twice with deionized water and then firstly vacuum concentrated. Propylene glycol monomethyl ether acetate (PGMEA) was introduced to the reaction solution so that the firstly vacuum concentrated reaction solution has a solid content of approximately 30%, and the result was secondly vacuum concentrated to obtain a product (polysiloxane copolymer).

Next, each product (polysiloxane copolymer) was obtained in the same manner except that the last reaction time of PTMS/MTMS/TEOS/DMDS was adjusted, and results of measuring weight average molecular weight (Mw) and ADR (2.38% tetramethylammonium hydroxide (TMAH) developing solution) for each of the obtained products are shown in the following Table 8.

**[Table 8]**

| Category | PTMS | MTMS | TEOS | DMDS | Reaction Time | APDMMS/MA | Mw | ADR (Å) |
|---|---|---|---|---|---|---|---|---|
| Example 45 | 23.4g | 34.3g | 25.0g | 6.54g | 2 Hours | 3.2g | 1285 | 3323 |
| Example 46 | 23.4g | 34.3g | 25.0g | 6.54g | 4 Hours | 3.2g | 1489 | 1502 |
| Example 47 | 23.4g | 34.3g | 25.0g | 6.54g | 6 Hours | 3.2g | 1653 | 523 |
| Example 48 | 23.4g | 34.3g | 25.0g | 6.54g | 8 Hours | 3.2g | 1903 | 154 |
| Example 49 | 23.4g | 34.3g | 25.0g | 6.54g | 10 Hours | 3.2g | 2239 | <10 |
| Example 50 | 23.4g | 34.3g | 25.0g | 6.54g | 12 Hours | 3.2g | 2412 | <10 |

### [Preparation Example 1] Preparation of Photosensitive Resin Composition Containing Photopolymerization Initiator

The polysiloxane copolymer prepared in Example 1 (binder resin) (5.5 g), SR399 (Sartomer) (crosslinkable compound) (1.65 g), Irgacure TPO (BASF Corporation) (photopolymerization initiator) (0.5 g), propylene glycol monomethyl ether acetate (PGMEA) (organic solvent) (7.5 g), KBM403 (Shin-Etsu Chemical Co., Ltd.) (adhesion aid) (0.03 g) and FZ-2122 (DOW) (surfactant) (0.08 g) were introduced to a reactor, and the result was stirred for 3 hours at room temperature. After going through a process of filtering with a 5.0 um filter, a photosensitive resin composition (solid content 25%) was prepared.

### [Preparation Example 2] Preparation of Photosensitive Resin Composition Containing Photopolymerization Initiator

A photosensitive resin composition (solid content 25%) was prepared in the same manner as in Preparation Example 1 except that TPM-P07 (Takoma Technology Corporation) was used instead of Irgacure TPO (BASF Corporation) as the photopolymerization initiator.

### [Preparation Example 3] Preparation of Photosensitive Resin Composition Containing Photosensitizer (Photo active compound)

The polysiloxane copolymer prepared in Example 1 (binder resin) (20 g), a diazonaphthoquinone compound (photosensitizer) (1 g), propylene glycol monomethyl ether acetate (PGMEA) (organic solvent) (8 g), KBM403 (Shin-Etsu Chemical Co., Ltd.) (adhesion aid) (0.1 g) and FZ-2122 (DOW) (surfactant) (0.14 g) were introduced to a reactor, and the result was stirred for 3 hours at room temperature. After going through a process of filtering with a 5.0 um filter, a photosensitive resin composition (solid content 25%) was prepared.

### [Preparation Example 4] Preparation of Photosensitive Resin Composition Containing Photoacid Generator

The polysiloxane copolymer prepared in Example 37 (binder resin) (20 g), 1,3-dioxo-1H-benzo[de]isoquinolin-2(3H)-yltrifluoromethanesulfonate (photoacid generator: Chemical Formula 10) (0.3 g), propylene glycol monomethyl ether acetate (PGMEA) (organic solvent) (8.8 g), BYK333 (surfactant) (0.03 g) and KBM303 (adhesion aid) (0.02 g) were introduced to a reactor, and the result was stirred for 3 hours at room temperature. After going through a process of filtering with a 5.0 um filter, a photosensitive resin composition (solid content 25%) was prepared.

### [Preparation Example 5] Preparation of Photosensitive Resin Composition Containing Thermal Acid Generator

The polysiloxane copolymer prepared in Example 1 (binder resin) (20 g), tetramethoxymethyl glycoluril (crosslinking binding agent) (9 g), 2-hydroxyhexyl p-toluenesulfonate (thermal acid generator) (3 g), propylene glycol monomethyl ether acetate (PGMEA) (organic solvent) (27 g), KBM403 (Shin-Etsu Chemical Co., Ltd.) (adhesion aid) (0.12 g) and FZ-2122 (DOW) (surfactant) (0.3 g) were introduced to a reactor, and the result was stirred for 3 hours at room temperature. After going through a process of filtering with a 5.0 um filter, a photosensitive resin composition (solid content 25%) was prepared.

### [Preparation Example 6] Preparation of Photosensitive Resin Composition Containing Photopolymerization Initiator and Thermal Polymerization Initiator

The polysiloxane copolymer prepared in Example 1 (binder resin) (5.5 g), SR399 (Sartomer) (crosslinkable compound) (1.65 g), TPM-P07 (Takoma Technology Corporation) (photopolymerization initiator) (0.35 g), di-tert-butyl peroxide (TCI Co., Ltd.) (thermal polymerization initiator) (0.15 g), propylene glycol monomethyl ether acetate (PGMEA) (organic solvent) (7.5 g), KBM403 (Shin-Etsu Chemical Co., Ltd.) (adhesion aid) 0.03 g and FZ-2122 (DOW) (surfactant) (0.08 g) were introduced to a reactor, and the result was stirred for 3 hours at room temperature. After going through a process of filtering with a 5.0 um filter, a photosensitive resin composition (solid content 25%) was prepared.

### [Preparation Example 7] Preparation of Photosensitive Resin Composition Containing Photopolymerization Initiator

The polysiloxane copolymer prepared in Example 38 (binder resin) (5.5 g), SR399 (Sartomer) (crosslinkable compound) (1.65 g), TPM-P07 (Takoma Technology Corporation) (photopolymerization initiator) (0.5 g), propylene glycol monomethyl ether acetate (PGMEA) (organic solvent) (7.5 g), KBM403 (Shin-Etsu Chemical Co., Ltd.) (adhesion aid) (0.03 g) and FZ-2122 (DOW) (surfactant) (0.08 g) were introduced to a reactor, and the result was stirred for 3 hours at room temperature. After going through a process of filtering with a 5.0 um filter, a photosensitive resin composition (solid content 25%) was prepared.

### [Preparation Example 8] Preparation of Black Pigment Photosensitive Resin Composition Containing Photopolymerization Initiator

The polysiloxane copolymer prepared in Example 1 (binder resin) (5.5 g), SR399 (Sartomer) (crosslinkable compound) (2.75 g), TPM-P07 (Takoma Technology Corporation) (photopolymerization initiator) (0.55 g), a carbon black pigment (0.84 g), propylene glycol monomethyl ether acetate (PGMEA) (organic solvent) (7.04 g), KBM403 (Shin-Etsu Chemical Co., Ltd.) (adhesion aid) (0.03 g) and FZ-2122 (DOW) (surfactant) (0.08 g) were introduced to a reactor, and the result was stirred for 3 hours at room temperature. After going through a process of filtering with a 5.0 um filter, a photosensitive resin composition (solid content 25%) was prepared.

### [Preparation Example 9] Preparation of Black Dye Photosensitive Resin Composition Containing Photopolymerization Initiator

The polysiloxane copolymer prepared in Example 1 (binder resin) (5.5 g), SR399 (Sartomer) (crosslinkable compound) (2.75 g), TPM-P07 (Takoma Technology Corporation) (photopolymerization initiator) (0.55 g), a black dye (0.84 g), propylene glycol monomethyl ether acetate (PGMEA) (organic solvent) (6.6 g), KBM403 (Shin-Etsu Chemical Co., Ltd.) (adhesion aid) (0.03 g) and FZ-2122 (DOW) (surfactant) (0.08 g) were introduced to a reactor, and the result was stirred for 3 hours at room temperature. After going through a process of filtering with a 5.0 um filter, a photosensitive resin composition (solid content 25%) was prepared.

### [Preparation Example 10] Preparation of Black Pigment Photosensitive Resin Composition Containing Photosensitizer (Photo Active Compound)

The polysiloxane copolymer prepared in Example 1 (binder resin) (20 g), a diazonaphthoquinone compound (photosensitizer) (1 g), a carbon black pigment (1.52 g), propylene glycol monomethyl ether acetate (PGMEA) (organic solvent) (6.9 g), KBM403 (Shin-Etsu Chemical Co., Ltd.) (adhesion aid) (0.1 g) and FZ-2122 (DOW) (surfactant) (0.14 g) were introduced to a reactor, and the result was stirred for 3 hours at room temperature. After going through a process of filtering with a 5.0 um filter, a photosensitive resin composition (solid content 25%) was prepared.

### [Preparation Example 11] Preparation of Black Dye Photosensitive Resin Composition Containing Photosensitizer (Photo Active Compound)

The polysiloxane copolymer prepared in Example 1 (binder resin) (20 g), a diazonaphthoquinone compound (photosensitizer) (1 g), a black dye (1.52 g), propylene glycol monomethyl ether acetate (PGMEA) (organic solvent) (6.9 g), KBM403 (Shin-Etsu Chemical Co., Ltd.) (adhesion aid) (0.1 g) and FZ-2122 (DOW) (surfactant) (0.14 g) were introduced to a reactor, and the result was stirred for 3 hours at room temperature. After going through a process of filtering with a 5.0 um filter, a photosensitive resin composition (solid content 25%) was prepared.

### [Comparative Preparation Example 1]

A photosensitive resin composition was prepared in the same manner as in Preparation Example 1 except that, instead of using the polysiloxane copolymer of Example 1 as the binder resin, an acrylic resin (weight average molecular weight 13,000) obtained by polymerizing benzyl methacrylate (30% by weight), methyl methacrylate (10% by weight) and methacrylic acid (10% by weight) in a 30% solid content under the presence of propylene glycol monomethyl ether acetate (PGMEA).

### [Comparative Preparation Example 2]

A photosensitive resin composition (solid content 25%) was prepared in the same manner as in Comparative Preparation Example 1 except that TPM-P07 (Takoma Technology Corporation) was used instead of Irgacure TPO (BASF Corporation) as the photopolymerization initiator.

### [Comparative Preparation Example 3]

The acrylic resin used in Comparative Preparation Example 1 (5.5 g), a diazonaphthoquinone compound (photosensitizer) (1 g), propylene glycol monomethyl ether acetate (PGMEA) (8 g), KBM403 (adhesion aid) (0.1 g) and FZ-2122 (surfactant) (0.14 g) were introduced to a reactor, and the result was stirred for 3 hours at room temperature. After going through a process of filtering with a 5.0 um filter, a photosensitive resin composition (solid content 25%) was prepared.

### [Comparative Preparation Example 4]

An acrylic resin (weight average molecular weight 15,000) (20 g) obtained by polymerizing 1-ethoxyethyl methacrylate (acetal-acrylic monomer) (25% by weight), benzyl methacrylate (10% by weight), methyl methacrylate (51% by weight) and methacrylic acid (14% by weight) in a 30% solid content under the presence of propylene glycol monomethyl ether acetate (PGMEA) as a binder resin, a photoacid generator of Chemical Formula 10 (0.3 g), propylene glycol monoethyl acetate (PGMEA) (8.8 g), BYK333 (surfactant) (0.03 g) and KBM303 (adhesion aid) (0.02 g) were introduced to a reactor, and the result was stirred for 3 hours at room temperature. After going through a process of filtering with a 5.0 um filter, a photosensitive resin composition (solid content 25%) was prepared.

### [Comparative Preparation Example 5]

The acrylic resin used in Comparative Preparation Example 1 (20 g), tetramethoxymethyl glycoluril (crosslinking binding agent) (9 g), 2-hydroxyhexyl p-toluenesulfonate (thermal acid generator) (3 g), propylene glycol monomethyl ether acetate (PGMEA) (27 g), BYK333 (surfactant) (0.03 g) and KBM303 (adhesion aid) (0.02 g) were introduced to a reactor, and the result was stirred for 3 hours at room temperature. After going through a process of filtering with a 5.0 um filter, a photosensitive resin composition (solid content 25%) was prepared.

### [Comparative Preparation Example 6]

The acrylic resin used in Comparative Preparation Example 1 (5.5 g), SR399 (Sartomer) (crosslinkable compound) (2.75 g), TPM-P07 (Takoma Technology Corporation) (photopolymerization initiator) (0.55 g), a carbon black pigment (0.84 g), propylene glycol monomethyl ether acetate (PGMEA) (organic solvent) (7.04 g), KBM403 (Shin-Etsu Chemical Co., Ltd.) (adhesion aid) (0.03 g) and FZ-2122 (DOW) (surfactant) (0.08 g) were introduced to a reactor, and the result was stirred for 3 hours at room temperature. After going through a process of filtering with a 5.0 um filter, a photosensitive resin composition (solid content 25%) was prepared.

### [Comparative Preparation Example 7]

The acrylic resin used in Comparative Preparation Example 1 (5.5 g), SR399 (Sartomer) (crosslinkable compound) (2.75 g), TPM-P07 (Takoma Technology Corporation) (photopolymerization initiator) (0.55 g), a black dye (0.84 g), propylene glycol monomethyl ether acetate (PGMEA) (organic solvent) (7.04 g), KBM403 (Shin-Etsu Chemical Co., Ltd.) (adhesion aid) (0.03 g) and FZ-2122 (DOW) (surfactant) (0.08 g) were introduced to a reactor, and the result was stirred for 3 hours at room temperature. After going through a process of filtering with a 5.0 um filter, a photosensitive resin composition (solid content 25%) was prepared.

### [Comparative Preparation Example 8]

The acrylic resin used in Comparative Preparation Example 1 (5.5 g), a diazonaphthoquinone compound (photosensitizer) (1 g), a carbon black pigment (0.84 g), propylene glycol monomethyl ether acetate (PGMEA) (organic solvent) (6.9 g), KBM403 (Shin-Etsu Chemical Co., Ltd.) (adhesion aid) (0.1 g) and FZ-2122 (DOW) (surfactant) (0.14 g) were introduced to a reactor, and the result was stirred for 3 hours at room temperature. After going through a process of filtering with a 5.0 um filter, a photosensitive resin composition (solid content 25%) was prepared.

### [Comparative Preparation Example 9]

The acrylic resin prepared in Comparative Preparation Example 1 (5.5 g), a diazonaphthoquinone compound (photosensitizer) (1 g), a black dye (0.84 g), propylene glycol monomethyl ether acetate (PGMEA) (organic solvent) (6.9 g), KBM403 (Shin-Etsu Chemical Co., Ltd.) (adhesion aid) (0.1 g) and FZ-2122 (DOW) (surfactant) (0.14 g) were introduced to a reactor, and the result was stirred for 3 hours at room temperature. After going through a process of filtering with a 5.0 um filter, a photosensitive resin composition (solid content 25%) was prepared.

### [Experimental Example]

Using each of the photosensitive resin compositions prepared in Preparation Examples 1 to 11 and Comparative Preparation Examples 1 to 9, the properties were evaluated using the following evaluation methods, and the results are shown in FIG. 1 and Table 9.

### (1) Sensitivity

After coating the photosensitive resin composition on a glass substrate using spin coating, the result was heat treated (hot plate) for 90 seconds at 90°C to 110°C to form a thin film having a thickness of 2 µm. The thickness of the formed thin film was measured using a stylus type film thickness measurement device (Veeco Instruments Inc., DEKTAK150). Then, the thin film was exposed through a mask using a high pressure mercury lamp, and then spray-developed using a TMAH 2.38% developing solution to obtain a pattern.

### (2) Film Retention Rate

After coating the photosensitive resin composition on a glass substrate using spin coating, the result was heat treated (hot plate) for 90 seconds at 90°C to 110°C to form a thin film having a thickness of 2 µm. After that, a photolithography process was conducted, and a film retention rate was measured by measuring thicknesses before and after development and changes in the thickness after going through post-bake of 250°C/60 min using a contact-type thickness measurement device (DEKTAK 6M, manufacturer Veeco Instruments Inc., USA). Herein, the post-bake was conducted at 110°C in Preparation Example 6.

### (3) Transmittance

After coating the photosensitive resin composition on a glass substrate using spin coating, the result was heat treated (hot plate) for 90 seconds at 90°C to 110°C to form a thin film having a thickness of 2 µm. After that, a cured film was obtained through post-bake of 250°C/60 min, and for the obtained cured film, average transmittance for light having a wavelength of 400 nm to 800 nm was measured using a UV-spectrometer. Herein, the post-bake was conducted at 110°C in Preparation Example 6.

### (4) Heat Resistance

After coating the photosensitive resin composition on a glass substrate using spin coating, the result was heat treated (hot plate) for 90 seconds at 90°C to 110°C to form a thin film having a thickness of 2 µm. After that, a cured film was obtained through post-bake of 250°C/60 min, and for the obtained cured film, a 5% decomposition temperature was measured through a TGA analyzer. Herein, the post-bake was conducted at 110°C in Preparation Example 6.

### (5) Optical Density

After coating the photosensitive resin composition on a glass substrate using spin coating, the result was heat treated (hot plate) for 90 seconds at 90°C to 110°C to form a thin film having a thickness of 1.1 µm. After that, a cured film was obtained through post-bake of 250°C/60 min, and for the obtained cured film, optical density was measured using an optical density meter (OD).

**[Table 9]**

| Category | Binder Resin | Sensitiv ity (mJ/cm²) | Film retention rate after Development (%) | Film retention rate after Post-bake (%) | Heat Resista nce (°C) | Transm ittanc e (%) | Optical Density |
|---|---|---|---|---|---|---|---|
| Preparation Example 1 | Example 1 | 150 | 85 | 97 | 370 | 98 | - |
| Preparation Example 2 | Example 1 | 80 | 85 | 97 | 370 | 97 | - |
| Preparation Example 3 | Example 1 | 20 | 90 | 100 | 400 | 98 | - |
| Preparation Example 4 | Example 37 | 20 | 85 | 99 | 395 | 99 | - |
| Preparation Example 5 | Example 1 | - | - | 100 | 380 | 98 | - |
| Preparation Example 6 | Example 1 | 100 | 85 | 97 | 350 | 98 | - |
| Preparation Example 7 | Example 38 | 80 | 90 | 98 | 370 | 97 | - |
| Preparation Example 8 | Example 1 | 300 | 80 | 97 | 370 | - | 2 |
| Preparation Example 9 | Example 1 | 200 | 80 | 91 | 360 | - | 1.6 |
| Preparation Example 10 | Example 1 | 150 | 85 | 96 | 400 | - | 2 |
| Preparation Example 11 | Example 1 | 100 | 85 | 91 | 390 | - | 1.6 |
| Comparative Preparation Example 1 | Acrylic Resin | 200 | 75 | 80 | 230 | 97 | - |
| Comparative Preparation Example 2 | Acrylic Resin | 120 | 80 | 85 | 230 | 96 | - |
| Comparative Preparation Example 3 | Acrylic Resin | 100 | 80 | 85 | 230 | 97 | - |
| Comparative Preparation Example 4 | Acrylic Resin | 80 | 80 | 80 | 220 | 99 | - |
| Comparative Preparation Example 5 | Acrylic Resin | - | - | 85 | 230 | 98 | - |
| Comparative Preparation Example 6 | Acrylic Resin | 350 | 75 | 80 | 230 | - | 2 |
| Comparative Preparation Example 7 | Acrylic Resin | 250 | 75 | 75 | 220 | - | 1.6 |
| Comparative Preparation Example 8 | Acrylic Resin | 180 | 80 | 80 | 230 | - | 2 |
| Comparative Preparation Example 9 | Acrylic Resin | 130 | 80 | 75 | 220 | - | 1.6 |

When referring to Table 9, the photosensitive resin composition of the present invention has excellent heat resistance and may control outgassing, and a high film retention rate value against heat may be obtained. In addition, sensitivity is superior, and a high process margin may be obtained due to a high development film retention rate. In addition, it was identified that excellent performance was obtained even under a low temperature curing condition (Preparation Example 6).

Meanwhile, FIG. 1 shows results of identifying the pattern formed using the photosensitive resin compositions of Preparation Example 3 (5 µm hole pattern) and Preparation Example 4 (1 µm line pattern) using a FE-SEM (model: JSM-6701F) microscope of JEOL Ltd., and it was identified that a highly sensitive and high resolution pattern was formed by forming the pattern using the photosensitive resin composition of the present invention.

## Claims

1. A polysiloxane copolymer comprising:
a siloxane-based polymer-derived structural unit; and
a silane-based monomer-derived structural unit,
wherein the silane-based monomer is selected from the group consisting of compounds represented by the following Chemical Formula 1 to Chemical Formula 3: 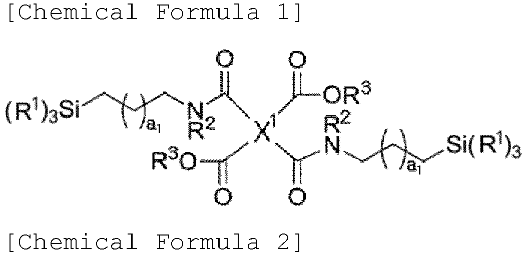 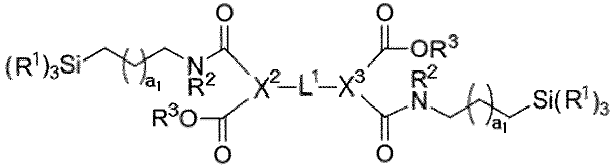 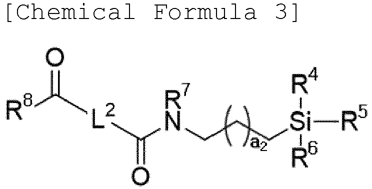
in Chemical Formula 1 and Chemical Formula 2,
X¹ to X³ are each independently selected from the group consisting of an aliphatic hydrocarbon group having 1 to 10 carbon atoms, an alicyclic hydrocarbon group having 4 to 20 carbon atoms and an aromatic hydrocarbon group having 4 to 20 carbon atoms;
R¹ is an aliphatic hydrocarbon group having 1 to 10 carbon atoms;
R² and R³ are each independently selected from the group consisting of hydrogen and an aliphatic hydrocarbon group having 1 to 10 carbon atoms;
L¹ is selected from the group consisting of an oxygen atom and an aliphatic hydrocarbon group having 1 to 12 carbon atoms; and
a₁ is an integer of 0 to 20,
in Chemical Formula 3,
R⁴ to R⁶ are each independently selected from the group consisting of hydrogen, an aliphatic hydrocarbon group having 1 to 10 carbon atoms and an aromatic hydrocarbon group having 3 to 20 carbon atoms;
R⁷ is selected from the group consisting of hydrogen and an aliphatic hydrocarbon group having 1 to 10 carbon atoms;
R⁸ is selected from the group consisting of hydrogen, a hydroxyl group and an aliphatic hydrocarbon group having 1 to 10 carbon atoms;
L² is selected from the group consisting of a single bond, an aliphatic hydrocarbon group having 1 to 10 carbon atoms, an alicyclic hydrocarbon group having 3 to 10 carbon atoms and an aromatic hydrocarbon group having 3 to 20 carbon atoms;
a₂ is an integer of 0 to 20; and
R¹ to R⁸, X¹ to X³, L¹ and L² are each independently unsubstituted or substituted with one or more types of substituents selected from the group consisting of an oxygen atom, a fluorine atom, an aliphatic hydrocarbon group having 1 to 10 carbon atoms and an aromatic hydrocarbon group having 3 to 20 carbon atoms.

2. The polysiloxane copolymer of Claim 1, wherein X¹ to X³ are each independently selected from the group consisting of an aliphatic hydrocarbon group having 1 to 3 carbon atoms, an alicyclic hydrocarbon group having 4 to 12 carbon atoms and an aromatic hydrocarbon group having 6 to 10 carbon atoms;
R¹ is an alkyl group having 1 to 10 carbon atoms or an alkyloxy group having 1 to 10 carbon atoms;
R² and R³ are hydrogen; and
L¹ is selected from the group consisting of an ether group, a ketone group and an alkylene group having 1 to 10 carbon atoms.

3. The polysiloxane copolymer of Claim 1, wherein R⁴ to R⁶ are each independently selected from the group consisting of hydrogen, an alkyl group having 1 to 10 carbon atoms and an alkyloxy group having 1 to 10 carbon atoms;
R⁷ is hydrogen;
R⁸ is a hydroxyl group; and
L² is selected from the group consisting of an alkylene group having 1 to 10 carbon atoms, an alkenylene group having 2 to 10 carbon atoms, a cycloalkylene group having 3 to 10 carbon atoms and an arylene group having 6 to 10 carbon atoms.

4. A method for preparing a polysiloxane copolymer, the method comprising:
preparing a first silane compound;
preparing a silane-based monomer by reacting a second silane compound and an anhydride-based compound; and
reacting the first silane compound and the silane-based monomer at the same time,
wherein the silane-based monomer is selected from the group consisting of compounds represented by the following Chemical Formula 1 to Chemical Formula 3: 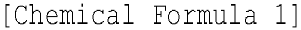 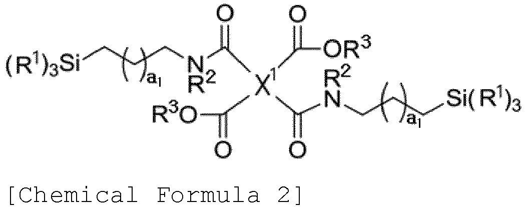 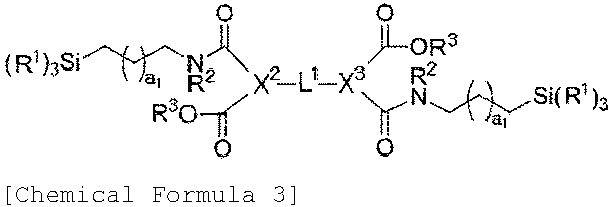 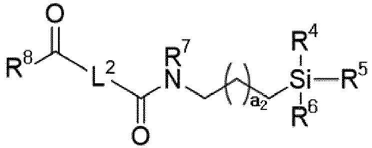
in Chemical Formula 1 and Chemical Formula 2,
X¹ to X³ are each independently selected from the group consisting of an aliphatic hydrocarbon group having 1 to 10 carbon atoms, an alicyclic hydrocarbon group having 4 to 20 carbon atoms and an aromatic hydrocarbon group having 4 to 20 carbon atoms;
R¹ is an aliphatic hydrocarbon group having 1 to 10 carbon atoms;
R² and R³ are each independently selected from the group consisting of hydrogen and an aliphatic hydrocarbon group having 1 to 10 carbon atoms;
L¹ is selected from the group consisting of an oxygen atom and an aliphatic hydrocarbon group having 1 to 12 carbon atoms; and
a₁ is an integer of 0 to 20,
in Chemical Formula 3,
R⁴ to R⁶ are each independently selected from the group consisting of hydrogen, an aliphatic hydrocarbon group having 1 to 10 carbon atoms and an aromatic hydrocarbon group having 3 to 20 carbon atoms;
R⁷ is selected from the group consisting of hydrogen and an aliphatic hydrocarbon group having 1 to 10 carbon atoms;
R⁸ is selected from the group consisting of hydrogen, a hydroxyl group and an aliphatic hydrocarbon group having 1 to 10 carbon atoms;
L² is selected from the group consisting of a single bond, an aliphatic hydrocarbon group having 1 to 10 carbon atoms, an alicyclic hydrocarbon group having 3 to 10 carbon atoms and an aromatic hydrocarbon group having 3 to 20 carbon atoms;
a₂ is an integer of 0 to 20; and
R¹ to R⁸, X¹ to X³, L¹ and L² are each independently unsubstituted or substituted with one or more types of substituents selected from the group consisting of an oxygen atom, a fluorine atom, an aliphatic hydrocarbon group having 1 to 10 carbon atoms and an aromatic hydrocarbon group having 3 to 20 carbon atoms.

5. A method for preparing a polysiloxane copolymer, the method comprising:
preparing a siloxane-based polymer by reacting a first silane compound;
preparing a silane-based monomer by reacting a second silane compound and an anhydride-based compound; and
reacting the siloxane-based polymer and the silane-based monomer,
wherein the silane-based monomer is selected from the group consisting of compounds represented by the following Chemical Formula 1 to Chemical Formula 3: 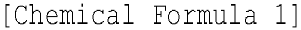 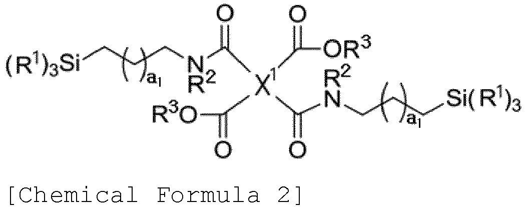 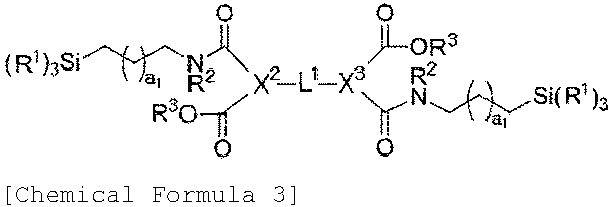 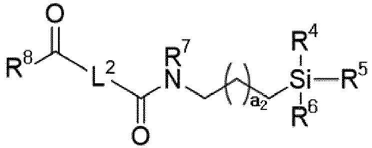
in Chemical Formula 1 and Chemical Formula 2,
X¹ to X³ are each independently selected from the group consisting of an aliphatic hydrocarbon group having 1 to 10 carbon atoms, an alicyclic hydrocarbon group having 4 to 20 carbon atoms and an aromatic hydrocarbon group having 4 to 20 carbon atoms;
R¹ is an aliphatic hydrocarbon group having 1 to 10 carbon atoms;
R² and R³ are each independently selected from the group consisting of hydrogen and an aliphatic hydrocarbon group having 1 to 10 carbon atoms;
L¹ is selected from the group consisting of an oxygen atom and an aliphatic hydrocarbon group having 1 to 12 carbon atoms; and
a₁ is an integer of 0 to 20,
in Chemical Formula 3,
R⁴ to R⁶ are each independently selected from the group consisting of hydrogen, an aliphatic hydrocarbon group having 1 to 10 carbon atoms and an aromatic hydrocarbon group having 3 to 20 carbon atoms;
R⁷ is selected from the group consisting of hydrogen and an aliphatic hydrocarbon group having 1 to 10 carbon atoms;
R⁸ is selected from the group consisting of hydrogen, a hydroxyl group and an aliphatic hydrocarbon group having 1 to 10 carbon atoms;
L² is selected from the group consisting of a single bond, an aliphatic hydrocarbon group having 1 to 10 carbon atoms, an alicyclic hydrocarbon group having 3 to 10 carbon atoms and an aromatic hydrocarbon group having 3 to 20 carbon atoms;
a₂ is an integer of 0 to 20; and
R¹ to R⁸, X¹ to X³, L¹ and L² are each independently unsubstituted or substituted with one or more types of substituents selected from the group consisting of an oxygen atom, a fluorine atom, an aliphatic hydrocarbon group having 1 to 10 carbon atoms and an aromatic hydrocarbon group having 3 to 20 carbon atoms.

6. A resin composition comprising:
a binder resin;
an organic solvent; and
an additive,
wherein the binder resin is the polysiloxane copolymer of any one of Claims 1 to 3.

7. The resin composition of Claim 6, which is used as a print circuit board material, a cover film material or a photosensitive material.
